# EUROPÄISCHE PATENTSCHRIFT

(11) **EP 2 233 913 B1**
(45) Veröffentlichungstag und Bekanntmachung des Hinweises auf die Patenterteilung: **19.07.2017**
(21) Anmeldenummer: 09156073.0
(22) Anmeldetag: 24.03.2009
(51) Int. Cl.: G01N 21/27, G01N 21/64

(54) **Optischer Standard zur Kalibrierung und Charakterisierung von optischen Messeinrichtungen**
Optical standard for calibrating and characterising optical measuring devices
Standard optique destiné au calibrage et à la caractérisation de dispositifs de mesure optique

(43) Veröffentlichungstag der Anmeldung: 29.09.2010
(73) Patentinhaber: BAM Bundesanstalt für Materialforschung und -prüfung, 12205 Berlin (DE)
(72) Erfinder: Resch-Genger, Dr. Ute, 12203, Berlin (DE); Hoffmann, Dr. Katrin, 12524, Berlin (DE); Behnke, Thomas, 13349, Berlin (DE); Würth, Christian, 10245, Berlin (DE)
(74) Vertreter: Zimmermann & Partner Patentanwälte mbB

(56) Entgegenhaltungen:
- EP-A1- 1 703 271
- EP-A2- 1 857 790
- US-A1- 2008 314 114
- US-B1- 7 480 042

## Beschreibung

Die Erfindung betrifft einen optischen Standard zur Kalibrierung oder Charakterisierung von optischen Messeinrichtungen, insbesondere Lumineszenzmessgeräten, sowie seine Verwendungen.

### Technologischer Hintergrund

Bei der Verwendung optischer Messeinrichtungen etwa in der Forschung und Entwicklung oder in der industriellen Qualitätsüberwachung stellt sich eine Vielzahl von Problemen, die eine regelmäßige Kalibrierung und Charakterisierung der optischen Messeinrichtung erfordern. Diese sollen nachfolgend am Beispiel von Lumineszenzmessgeräten dargestellt werden, wo außerdem auch Referenzsysteme für die Messung von Intensitäten benötigt werden.

### Spektrale Fluoreszenz- bzw. Emissionsstandards für die Emissionskorrektur

Jede Lumineszenzmesstechnik liefert Messdaten, die sich aus analyt- und gerätespezifischen Beiträgen zusammensetzen. Letztere spiegeln die Wellenlängenabhängigkeit der im Anregungs- und Emissionskanal des Gerätes enthaltenen Lichtquelle(n) und optischen Bauelemente wider sowie die spektrale Empfindlichkeit der eingesetzten Detektionssysteme. Die Vergleichbarkeit von Lumineszenzdaten über Geräte- und Laborgrenzen, die Erfassung der Gerätealterung, die Rückführbarkeit (EN ISO/IEC 17025) von Lumineszenzdaten und die Optimierung von Lumineszenzmethoden erfordern die Ermittlung dieser gerätespezifischen Effekte, um gemessene Spektren eines Analyten zu korrigieren und die reinen analytspezifischen Beiträge zu erhalten. Dies gilt auch für Messmethoden, welche die Emission von Luminophoren mit spektral unterschiedlichen Emissionsspektren vergleichen, wie z.B. die Bestimmung von Fluoreszenzquantenausbeuten, und für Emissionsmessungen bei verschiedenen Anregungswellenlängen. Die Erfassung dieser gerätespezifischen Effekte erfolgt durch die Ermittlung so genannter Emissions- und Anregungskorrekturfunktionen, die die Wellenlängenabhängigkeit und Polarisationsabhängigkeit der spektralen Empfindlichkeit der eingesetzten Detektionskanäle (Emissionskorrektur) und die Wellenlängenabhängigkeit und Polarisationsabhängigkeit der spektralen Beleuchtungsstärke am Probenort bzw. der Anregungslichtintensität (Anregungskorrektur) beinhalten.

Die einfache und rückführbare Kalibrierung von Lumineszenzmesssystemen kann dabei mit zertifizierten physikalischen Transferstandards erfolgen, also mit einem zertifizierten Strahldichtenormal bzw. einer Standardlampe (typischerweise für den Emissionskanal) und/oder einem zertifizierten Empfängernormal (typischerweise für den Anregungskanal). Alternativ können chemische Transfer- bzw. so genannte Fluoreszenzstandards mit (idealerweise zertifizierten) spektral korrigierten, also geräteunabhängigen Emissions- und/oder Anregungsspektren eingesetzt werden. Die rückführbaren und idealerweise zertifizierten (physikalischen oder chemischen) Transferstandards sollten nach Möglichkeit bei identischen Bedingungen wie typische Proben vermessen werden können (z.B. in den gleichen Probenbehältern/-formaten, mit den gleichen Polarisatoreinstellungen, Filtern und Abschwächern sowie den gleichen Einstellungen für die Monochromatorspaltbreite, Photomultiplierspannung, das "Sampling Interval" und die Integrationszeit oder Scangeschwindigkeit) und für möglichst viele verschiedene Gerätetypen, Formate und Messgeometrien geeignet sein sowie einen weiten Spektralbereich, typischerweise UV/vis, vis/NIR und/oder UV/vis/NIR, abdecken. Mit zunehmender Nutzung des NIR-Spektralbereiches für viele verschiedene Fluoreszenzapplikationen (z.B. optische Bildgebung; 1. diagnostisches Fenster von ca. 650 bis 900 nm und 2. diagnostisches Fenster von ca. 1300 bis 1500 nm) gewinnen Standards für den NIR-Spektralbereich stark an Bedeutung.

Voraussetzungen für die Eignung als chemischer Transferstandard bzw. Referenzmaterial ist dabei die problemspezifische Farbstoffauswahl. Dies impliziert beispielsweise breite, glatte und unstrukturierte Emissionsspektren im Falle von spektralen Emissionsstandards und breite, glatte und unstrukturierte Absorptions- bzw. Anregungsspektren im Falle von Anregungsstandards. Für chemische Transferstandards müssen außerdem ihre korrigierten Emissions- und/oder Anregungsspektren und vorzugsweise die Messunsicherheit bekannt sein.

Die rückführbare Kalibrierung von Lumineszenzmesssystemen im UV/vis/NIR-Spektralbereich erfordert die Kombination mehrerer Chromophore mit (idealerweise zertifizierten) korrigierten Fluoreszenzspektren, die aufeinander abgestimmt sind. Dies beinhaltet insbesondere neben breiten, möglichst flach ansteigenden, unstrukturierten Banden Schnittpunkte benachbarter Spektren bei ausreichend hohen Fluoreszenzintensitäten, um so die Verknüpfung der Einzelkorrekturkurven zu einer Gesamtkorrekturfunktion mit möglichst geringer Messunsicherheit zu gewährleisten. Für die Applikation von Chromophorkombinationen zur Ermittlung der Emissionskorrektur im UV/vis/NIR-Spektralbereich gibt es nur wenige Beispiele. Beispiele für Emissionsstandard-Kombinationen sind chromophorhaltige Polymerfolien (NIST, zertifizierte Emissionsspektren), eine Kombination des Emissionsstandards Chininsulfat-Dihydrat (SRM 936a) mit küvettenförmigen chromophordotierten Gläsern und Emissionsstandard-Lösungen (z.B. J.A. Gardecki, M. Maroncelli, Appl. Spectrosc. 1998, 52, 1179). Darüber hinaus sind chromophorhaltige Polymethylmethacrylat (PMMA)-Blöcke in Küvettenform als Emissionsstandards (Fa. Starna, Fa. Optiglass) und Standardlösungen (Fa. Invitrogen ehemals Molecular Probes) erhältlich. Ein Kit spektraler Fluoreszenzstandards ist aus DE 10 2004 044 717 A bekannt, der die Emissions- und Absorptionskorrektur in einem breiten Spektralbereich erlaubt. Der abgedeckte Spektralbereich ist gemäß der älteren Anmeldung DE 10 2008 040 513.2 durch Kombination mit einer langwellig emittierenden Cyaninverbindung als spektraler Fluoreszenzstandard in den NIR-Bereich erweiterbar. Darüber hinaus werden in der oben genannten Publikation von Gardecki und in DE 10 2004 044 717 A statistische Verfahren zur Verknüpfung der für die einzelnen Emissionsstandards erhaltenen Korrekturfunktionen zu einer Gesamtkorrekturfunktion. Ein optischer Standard zur Kalibrierung oder Charakterisierung von optischen Messeinrichtungen ist aus der Druckschrift US 2008/314114 A1 bekannt.

Alle bekannten Standard-Kombinationen stellen immer eine Kombination von singulären Standards dar, wobei oftmals jeder Standard bei einer unterschiedlichen Anregungswellenlänge zur Emission angeregt werden muss. Dies bedeutet, dass jede Komponente eines Standard-Sets separat vermessen werden muss und jede Messung eine Emissionskorrekturkurve für einen begrenzten Spektralbereich von maximal 150 bis 200 nm (⇔× im vis-Bereich) im Falle Chromophor-basierter Standards (z.B. Chininsulfat) liefert, die dem Emissionsbereich des jeweiligen Standards bzw. Chromophors entspricht. Diese Standardspezifischen Korrekturkurven müssen in einem anschließenden Schritt mit evaluierten mathematischen Prozeduren zu einer Gesamtkorrekturkurve kombiniert werden, um so einen breiten Spektralbereich abzudecken. Eine Anpassung der Emissionsintensitäten unterschiedlicher Standards aufeinander, die z.B. im Falle von stark variierenden Extinktionskoeffzienten und Fluoreszenzquantenausbeuten sowie geräteseitig im Falle von stark variierenden spektralen Sensitivitäten notwendig ist, kann nur über die Anpassung der Chromophor-Konzentrationen für flüssige Standards erfolgen. Bei festen Standards ist typischerweise keine Anpassung mehr möglich.

### Standards zur Überprüfung der Geräteperformance und der Gerätelangzeitstabilität (Day-to-Day-Intensiätsstandards)

Standards zur Überprüfung der Geräteperformance und der Gerätelangzeitstabilität (so genannte Day-to-Day-Intensity Standards) sind notwendig, um beispielsweise die durch die Alterung von optischen und optisch-elektronischen Bauteilen bedingte Gerätedrift zu erfassen und eine Vergleichbarkeit der an verschiedenen Tagen durchgeführten Messungen von relativen Fluoreszenzintensitäten zu ermöglichen. Die Verfügbarkeit solcher Standards ist außerdem sehr wichtig für die im Rahmen von Laborakkreditierungen nach ISO 17025 notwendige regelmäßige Durchführung von Gerätetests und -überprüfungen. Der häufigste und bislang einzige etablierte Test zur Überprüfung der Geräteperformance und der Gerätelangzeitstabilität ist der so genannte Raman-Test. Dazu wird nicht-fluoreszentes Reinstwasser bei 350 nm bestrahlt und die Intensität der Raman-Streuung bei 397 nm gemessen. Dieser Test ist nur für den UV-Spektralbereich geeignet.

Zudem ist bekannt, eine Variation der Intensität von Emittern durch ihre Kombination mit einem Absorber zu realisieren. Hiefür wurde z.B. breitbandig im vis-Spektralbereich emittierendes Chininsulfat mit einem breitbandig absorbierenden Absorber kombiniert (S.A. Tucker et al., J. Chem. Ed. 1992, 69(1), A8-A12) oder ein vergleichsweise schmalbandig emittierender Fluorophor mit einem schmalbandigen Absorber (R. Giebeler et al., J. Fluoresc. 2005, 15(3), 363-375).

### Intensitätsstandards

Jede Lumineszenztechnik liefert grundsätzlich nur relative Intensitäten, sofern nicht sämtliche nach Chromophoranregung emittierten Photonen detektiert werden, wie dies z.B. in Ulbrichtkugelmesssystemen der Fall ist. Für eine Quantifizierung von Intensitätsmessungen ist daher in den allermeisten Fällen entweder eine Korrelation mit der Konzentration des zu quantifizierenden Emitters notwendig (z.B. durch Erstellung einer Kalibriergeraden) oder die Verwendung eines emittierenden Bezugssystems, d.h. eines Intensitätsstandards. Dies können je nach Lumineszenzmethode z.B. Fluoreszenzquantenausbeutestandards sein (typischerweise Farbstofflösungen bekannter Fluoreszenzquantenausbeute) sowie Kalibrier-Slides (Mikroarraytechnologie) oder Farbstoff-markierte fluoreszierende Partikel, wie im Falle der Durchflusszytometrie, bei der die Emissionsintensität der Partikel zuvor durch vergleichende Fluoreszenzmessungen mit den verwendeten Fluorophoren in Form von MESF-Einheiten (measurable equivalents of soluble Fluorophore) quantifiziert wird. Ein anderer, aus der Fluoreszenzmikroskopie stammender Ansatz verwendet eine oder mehrere fluoreszierende Referenzflächen, wobei in einer möglichst identischen Mikroumgebung derselbe Fluorophor für den Standard verwendet wird, der auch quantifiziert werden soll, um so möglichst ähnliche Emissionseigenschaften von Probe und Standard zu garantieren. In der Fluoreszenzsensorik ist das Prinzip der Signal-Referenzierung (Signal-Ratioing) gebräuchlich. Signal-Referenzierung kann realisiert werden, indem die gemessene Target-sensitive relative Fluoreszenzintensität eines Targetsensitiven einfarbig emittierenden Sensormoleküls auf einen zweiten Farbstoff bezogen wird, der deutlich spektral getrennt vom ersteren Fluorophor emittiert und dessen Emissionsintensität unabhängig vom Target ist. Alternativ werden hierzu dual emittierende Sensormoleküle, die in Gegenwart des Targets sehr starke spektrale Verschiebungen ihrer Absorption (ratioing in excitation) oder Emission zeigen, oder FRET-Systeme verwendet. Wünschenswert sind hier Systeme, die durch die Kombination von verschiedenen optischen Komponenten hinsichtlich ihrer spektralen Eigenschaften auf das jeweilige Problem angepasst werden können und deren Intensität mit möglichst einfachen Mitteln problemadaptiert eingestellt oder sogar variiert werden kann. Bekannt ist hier die Kombination einer fluoreszierenden und einer absorbierenden Komponente, welche zur Abschwächung oder zur Strukturierung der Emission dient, oder einer reflektierenden Komponente. Beispielsweise ist die Kombination von LEDs mit Abschwächern oder die Kombination von Emittern und Absorbern für die Kalibrierung von Mikrotiterplattenauslesegeräten bekannt (R. Giebeler et al., J. Fluoresc. 2005, 15(3), 363-375) oder ein LED-Slide für die Fluoreszenzmikroskopie (I.T. Young, Proc. SPIE 1983, 38, 326-335). Dabei werden aber nur die spektralen Eigenschaften oder die Intensität eines einzigen Fluorophors variiert.

Wünschenswert wären Intensitätsstandards, deren spektrale Emissionseigenschaften und/oder deren Emissionsintensität möglichst einfach kontrolliert eingestellt werden können, ohne die chemische Zusammensetzung oder die Konzentration zu variieren, beispielsweise für die Applikation als relatives Bezugssystem für die ratiometrische Messung von Fluoreszenzintensitäten, für die Erfassung von Gerätedrifts und für die Quantifizierung von Intensitäts-basierten Fluoreszenzmessungen. Bislang muss für jede Applikation bzw. für jedes gewünschte spektrale Verhalten bzw. Emissionsprofil speziell ein Standard entwickelt und evaluiert werden.

### Bestimmung des Linearitätsbereichs von Lumineszenzdetektionssystemen

Voraussetzung für die Bestimmung der Emissionskorrekturfunktionen von Lumineszenzmesssystemen und für jede quantitative Lumineszenzanalytik ist die Kenntnis des Linearitätsbereichs der verwendeten Detektionssysteme. Dieser hängt im Falle von gängigen Detektoren wie PMTs und CCD-Systemen von der Detektionswellenlänge ab. Hierfür gibt es bislang keine einheitliche Vorgehensweise. Farbstoffe, die zur Bestimmung des Linearitätsbereichs von Fluoreszenzdetektionssystemen geeignet sind, zeichnen sich insbesondere durch eine möglichst geringe Überlappung von Absorption und Fluoreszenz aus. Dies ist Voraussetzung dafür, dass bei Extinktionen bis ca. 0,1 die Emissionsspektren (1-cm-Küvette) noch konzentrationsunabhängig sind. Im Allgemeinen vorteilhaft sind auch glatte, unstrukturierte Emissionsspektren, die einen möglichst großen Emissionspektralbereich abdecken.

Eine Methode, die auf einem Emissionsstandard (Chininsulfat-Dihydrat) basiert, ist in ASTM E 578-83 beschrieben. Die Anregungs- und Emissionswellenlängenbereiche, für die das Verfahren eingesetzt werden kann, sind jedoch durch das Absorptions- und Emissionsspektrum von Chininsulfat-Dihydrat limitiert, so dass der Linearitätsbereich nicht für den gesamten interessierenden Spektralbereich ermittelt werden kann. Zudem sind integral messende Fluoreszenzgeräte, wie z.B. Filterfluorometer, viele Mikrotiterplattenauslesegeräte und Scanner für die optische Bildgebung, in der Wahl der Anregungs- und Emissionswellenlängen begrenzt durch die verwendeten Anregungslichtquellen (Laser oder Lampe mit Anregungsfilter) und die integrale Detektion (Emissionsfilter und Detektor). Des Weiteren sind vom NIST zertifizierte Fluoreszein-Lösungen (SRM 1932) und Fluoreszein-Lösungen der Firma Molecular Probes (Fluorescein NIST-Traceable Standard F36915) verfügbar. Diese sind aufgrund des vergleichsweise schmalen Absorptions- und Emissionsspektrum von Fluoreszein nur in einem engen vis-Spektralbereich einsetzbar. Ferner sind die aus mehreren Fluorophoren in Lösungen bestehenden "Rediplate Microplate Intensity Standards" (Fa. Invitrogen) bekannt, die aufgrund der großen Überlappung der Absorptions- und Emissionsspektren problematisch sind, und die "Fluorescence Reference Standards" (Fa. MATECH), welche in Mikrotiterplatten integrierte, Chromophor-dotierte feste Matrices für verschiedene Anregungs- und Emissionswellenlängen im UV/vis-Spektralbereich umfassen und damit nur für Mikrotiterplattenauslesegeräte geeignet sind. Eine Variation der Konzentration und damit der Fluoreszenzintensität für eine problemspezifische Anpassung durch den Anwender ist nicht möglich.

Bislang muss zur Bestimmung des Linearitätsbereichs von Lumineszenzdetektionssystemen die Konzentration des Fluorophors variiert werden. Zudem wird pro Messung bzw. pro Chromophor nur ein vergleichsweise enger Spektralbereich abgedeckt.

Wünschenswert wäre ein Standard, der die einfache und schnelle Ermittlung der Linearität des Detektionssystems einem breiten Spektralbereich, vorzugsweise im gesamten Spektralbereich des Gerätes (multi-funktionaler Abschwächer) mit nur wenigen Messungen und idealerweise mit einem einzigen Standard erlaubt.

### Überprüfung der Wellenlängenrichtigkeit und des spektralen Auflösungsvermögens

Für hochauflösende Spektrofluorometer werden zur Überprüfung der Wellenlängenrichtigkeit und des spektralen Auflösungsvermögens typischerweise Atomemissionslinien von Gasentladungslampen verwendet, die Mischungen von Gasen wie Neon und Quecksilber enthalten, um einen möglichst großen Spektralbereich abzudecken.

Für Lumineszenzmessgeräte wie Mikrotiterplattenauslesegeräte oder spektral auflösende Mikroskope oder spektral auflösende Imaging-Systeme für die optische Bildgebung, die eine geringere Auflösung von typischerweise größer 2 nm besitzen (so genannte Robustmessgeräte), kann die Wellenlängenrichtigkeit und das spektrale Auflösungsvermögen auch mit schmalbandig emittierenden Chromophoren (Mischungen verschiedener Lanthanidionen z.B. in einer Glasmatrix) oder durch die Kombination eines oder mehrerer schmalbandiger Absorber mit einem oder mehreren Emittern erreicht werden. Es gibt Beispiele für die Kombination eines Fluorophors mit einem Absorber, die bereits oben beschrieben wurden.

### Streuende und fluoreszierende Standards

Generell spielt die Messung von Fluoreszenz in streuenden Systemen eine große Rolle für biomedizinische Applikationen der Fluorometrie. Dies gilt insbesondere für fluorometrische Untersuchungen an Geweben mit Verfahren der optischen Bildgebung, z.B. für die Frühdiagnostik von krankheitsspezifischen Veränderungen auf molekularer Ebene im Spektralbereich von ca. 650 bis 900 nm und im zweiten diagnostischen Fenster. Hierfür werden als Standards so genannte Phantome eingesetzt, die aus einem an einem oder mehreren definierten Orten lokalisierten NIR-Fluorophor und einem festen oder flüssigen absorbierenden und streuenden Medium bestehen. Typischerweise werden Intralipid, Liposyn oder in eine Flüssigkeit bzw. feste Polymermatrix eingebrachte Mikropartikel (z.B. Silica, PMMA, Polystyrol) als Streuer verwendet. Die eingesetzten Fluorophore für den NIR-Bereich sind typischerweise symmetrische oder asymmetrische Cyaninfarbstoffe wie Indocyanine Green (ICG) oder IR-125, Diethylthiatricarbocyanine Iodide (DTTCI), und IR-140, die sich durch strukturierte Absorptions- und Emissionsbanden auszeichnen und einen großen Überlappungsbereich von Absorption und Fluoreszenz. Solche Systeme sind sehr anfällig für innere Filtereffekte (Reabsorption).

Wünschenswert wären streuende Fluoreszenzstandards, welche eine einfache Kombination von beliebigen Emittern mit Streuern variabler Streueigenschaften und ggf. auch mit Absorbern ermöglichen, um ein einfache Anpassung der spektralen Emissions- und Absorptionseigenschaften des Standards an das jeweilige Problem zu erlauben.

### Kurze Beschreibung der Erfindung

Der Erfindung liegt die Aufgabe zugrunde, einen variablen optischen Standard als "Werkzeug" zur Kalibrierung und/oder Charakterisierung von optischen Messeinrichtungen zur Verfügung zu stellen, dessen Absorptions-, Emissions- und/oder Streu- und Reflexionseigenschaften in Abhängigkeit von einem vorliegenden Kalibrier- bzw. Charakterisierungsproblem und einer vorhandenen Messgeometrie in einfacher Weise einstellbar sind. Der Standard sollte idealerweise einen möglichst breiten oder flexibel einstellbaren Spektralbereich mit variabel einstellbarer Intensität und variabel einstellbarem spektralen Profil abdecken und die Kalibrierung oder Charakterisierung der Messeinrichtung vereinfachen und beschleunigen.

Diese Aufgabe wird durch einen optischen Standard mit den Merkmalen des Anspruchs 1 gelöst. Der erfindungsgemäße optische Standard zur Kalibrierung oder Charakterisierung von optischen Messeinrichtungen umfasst eine Kombination von mindestens zwei im Wesentlichen planparallel miteinander verbindbaren oder verbundenen schichtförmigen optischen Standardmodulen mit definierten (also bekannten) optischen Eigenschaften. Die Standardmodule unterscheiden sich jeweils durch mindestens eine ihrer optischen Eigenschaften voneinander, nämlich durch ihre Absorptions-, Emissions-, Streu- und/oder Reflexionseigenschaften. Sie sind so beschaffen, dass sie mit einer elektromagnetischen Strahlung, die auf einer ihrer beiden Hauptflächen auftrifft (und, wenn die Strahlung nicht reflektiert wird, in das Modul zumindest teilweise eintritt) in physikalische Wechselwirkung treten. Dabei wird unter "physikalischer Wechselwirkung" jegliche wellenlängenabhängige oder -unabhängige, elastische oder unelastische Interaktion zwischen der eingestrahlten elektromagnetischen Strahlung und der Materie der einzelnen optischen Standardmodule verstanden, insbesondere wellenlängenabhängige oder -unabhängige Absorption, die Anregung einer Emission, wellenlängenabhängige oder -unabhängige Streuung und Reflexion. Auf diese Weise entsteht eine physikalische Wechselwirkung des eingestrahlten Lichts mit jedem der eingesetzten optischen Standardmodule, wodurch eine aus dem Standard austretende Strahlung durch jedes der Standardmodule hinsichtlich mindestens einer der genannten optischen Eigenschaften moduliert ist.

Durch die erfindungsgemäße Sandwich-artige Kombination einer Mehrzahl einzelner optischer Standardmodule kann ein durch den Standard emittiertes, transmittiertes, reflektiertes und/oder gestreutes Gesamtspektrum dargestellt werden, das bei geeigneter Komponentenwahl einerseits einen breiten Spektralbereich abdeckt, insbesondere den UV/vis/NIR-Bereich, oder einen problemspezifisch angepassten schmalen Spektralbereich mit einstellbarer Bandenform und/oder Intensität und somit eine Kalibrierung und/oder Charakterisierung der Messeinrichtung in diesem breiten oder problemspezifisch relevanten Spektralbereich mit einer geringen Anzahl von Einzelmessungen, gegebenenfalls sogar mit nur einer einzigen Messung ermöglicht. Darüber hinaus lassen sich Gesamtspektren des Standards darstellen, die annähernd beliebig moduliert werden können. Dabei entspricht ein solches Gesamtspektrum nicht unbedingt nur der bloßen Summe der Einzelspektren der einzelnen Module. Vielmehr kann, wenn dieses gewünscht ist, auch gezielt eine gegenseitige Beeinflussung erzeugt werden. Der modulare Aufbau erlaubt eine einfache und vielfältige Kombination der Module, so dass mit geringem Aufwand die Absorptions-, Emissions- (insbesondere Lumineszenz-) und Streueigenschaften problemadaptiert variiert werden können.

Dabei kann der Standard als externes separates Charakterisierungswerkzeug verwendet werden oder als internes, in das Messsystem integriertes Charakterisierungswerkzeug.

In bevorzugter Ausführung umfassen die optischen Standardmodule zumindest ein chromophorbasiertes oder physikalisches Emissionsstandardmodul, das bei geeigneter eingestrahlter Anregungsstrahlung zur Emission eines definierten (wellenlängenabhängigen) Lumineszenzspektrums angeregt werden kann, insbesondere eines Fluoreszenzspektrums. Insbesondere kann eine Kombination mehrerer chromophorbasierter und/oder physikalischer Emissionsstandardmodule eingesetzt werden, die mit Vorteil so aufeinander abgestimmt sind, das ihre Emissionsbanden einander teilweise überlappen, um so einen vorbestimmten, möglichst breiten Spektralbereich abzudecken. Dabei ist insbesondere bevorzugt, dass eine relative Intensität an den Überschneidungswellenlängen zweier "benachbarter" normierter Emissionsbanden mindestens 10 %, insbesondere mindestens 20 % des Bandenmaximums beträgt. Chromophorbasierte, also chemische Emissionsstandardmodule umfassen organische, anorganische und anorganisch-organische Chromophore, die auch miteinander kombiniert werden können. Prinzipiell ist jedoch auch der Einsatz anderer Lumineszenzphänomene denkbar wie z.B. der Elektrolumineszenz. Physikalische Emissionsstandards sind insbesondere Lampen mit breitem Emissionsspektrum oder schmalem Emissionsspektrum oder einem aus einer Vielzahl von schmalen Linien bestehenden Spektrum. Das von mindestens einem Emissionsstandardmodul emittierte Spektrum wird bevorzugt durch weitere Standardmodule moduliert, wobei Modulierung die Überlagerung mit Absorptions- und/oder anderen Emissionsbanden, spektrale Beschneidung des Spektrums durch Filter, gleichmäßige Intensitätsabschwächung, Verbesserung der Homogenität der Ausleuchtung etc. umfasst.

Im Rahmen der vorliegenden Erfindung ist der erfindungsgemäße optische Standard bevorzugt als Emissionsstandard ausgestaltet, wobei er zumindest ein Emissionsstandardmodul aufweist. Der Begriff "Emissionsstandard" umfasst hier insbesondere spektrale Fluoreszenzstandards zur Ermittlung der relativen spektralen Empfindlichkeit von Detektionssystemen (wozu ein breites unstrukturiertes Spektrum bevorzugt ist) oder zur Ermittlung und Überprüfung der Wellenlängenrichtigkeit und der spektralen Auflösung (wozu ein strukturiertes Spektrum mit mehreren, möglichst schmalen Banden in einem möglichst breiten Spektralbereich bevorzugt ist) sowie Intensitätsstandards. Ein Intensitätsstandard, wie z.B. ein Quantenausbeutestandard, ist dabei ein Bezugssystem für die Messung von relativen Intensitäten bei einer festen Anregungswellenlänge und einer festen Emissionswellenlänge oder bei einer festen Anregungswellenlänge und integral über einen definierten Emissionsspektralbereich, das entweder hinsichtlich seiner spektralen Eigenschaften auf die Probe angepasst ist oder sich von dieser spektral deutlich unterscheiden sollte. Für die Applikation als so genannter Day-to-day-Intensitätsstandard oder zur Ermittlung des Linearitätsbereichs eines Detektionssystems können auch mehrere Emissionsbanden über einen möglichst breiten Emissionsspektralbereich vorteilhaft sein.

Weiterhin können die optischen Standardmodule zumindest ein Absorptionsstandardmodul zur wellenlängenabhängigen Absorption der Strahlung umfassen, wobei auch hier eine Kombination mehrerer Absorptionsstandardmodule vorgesehen sein kann. Einige der als chemische Emissionsstandards einsetzbaren Chromophore können - da die Emission eine Absorption voraussetzt - auch als Absorptionsstandards eingesetzt werden. Als Absorber sind insbesondere alle Systeme denkbar, die zur gezielten Modulation des Emissionsspektrums des Standards eingesetzt werden können, also zur Steuerung seiner spektralen Lage und/oder Form und und/oder Intensität.

Mit besonderem Vorteil umfassen die Standardmodule des erfindungsgemäßen optischen Standards eine Kombination von mindestens zwei, insbesondere mindestens drei, aufeinander abgestimmten Emissionsstandardmodulen und/oder eine Kombination von mindestens zwei, insbesondere mindestens drei, aufeinander abgestimmten Absorptionsstandardmodulen.

Die chromophorbasierten (chemischen) Emissions- oder Absorptionsstandards umfassen insbesondere Lösungen der Chromophore in geeigneten Lösungsmitteln und chromophordotierte feste Matrices, wie chromophordotierte Gläser und Glaskeramiken oder chromophordotierte organische, anorganische und anorganisch-organische Polymermatrices. Diese können als Volumensystem, Schichten, Filme und Folien variabler Dicke, Gele, Hydrogele und Partikel variabler Größe ausgeführt sein oder als gedruckte, aufgeklebte oder gepresste Schichten von organischen, anorganisch-organischen und anorganischen Phosphoren, wie z.B. YAG:Cer (Reinmaterial oder verdünnt mit einem nicht-fluoreszenten Zusatz wie z.B. Bariumsulfat, Teflon, Polymerpartikel; auch unterschiedliche Korngrößen des Phosphors). Die als Emissions- oder Absorptionsstandards verwendeten Chromophore oder Chromophormischungen können dabei anorganische oder organische Substanzen mit schmalbandigen oder breitbandigen Emissions- bzw. Absorptionsspektren sein. Dabei wird im Rahmen der vorliegenden Erfindung unter "schmalbandig" eine Bandenbreite auf halber Höhe (full width at half height FWHH; beispielhafte Angaben hier bezogen auf den vis-Spektralbereich) von höchstens 50 nm, insbesondere höchstens 30 nm oder sogar weniger verstanden. Demgegenüber wird unter "breitbandig" eine Bandenbreite von üblicherweise mehr als 60 nm, insbesondere mindestens 80 nm oder sogar um 100 nm oder mehr verstanden. Organische Farbstoffe können LE-artige Emission (für locally excited (state), d.h. Emission von im Franck-Condon-Zustand befindlichen Species) oder CT-artige Emission (für charge-transfer) aufweisen oder duale Fluoreszenz. Anorganische Chromophore umfassen insbesondere Übergangs- und Seltenerdmetallionenkomplexe, wie z.B. Ru(II)- oder Pt(II)-Verbindungen oder Eu(II)- oder Eu(III)-Komplexe, sowie lumineszente Seltenerdmetalle, umfassend Scandium, Yttrium, Lanthan sowie die Lanthanoiden (umfassend 14 Elemente der Ordnungszahl 58 bis 71), insbesondere Cer (Ce), Europium (Eu), Terbium (Tb), Thulium (Tm), Erbium (Er), Samarium (Sm), Holmium (Ho). Ebenfalls einsetzbar sind Systeme, die eine partikelgrößenabhängige (in der Regel kontinuierliche) Absorption und eine schmale Emission oder seltener auch eine breite Emission zeigen, wie z.B. Halbleiter-Nanokristalle (Beispiele für Nanokristalle sind u.a. klassische Quantum-Dots wie CdSe und CdTe, NIR-Quantum-Dots wie PbS, PbSe oder CdHgTe und mit verschiedenen Metallionen dotierte Quantum-Dots wie z.B. Mn(II)-dotiertes ZnS oder ZnSe oder Silicium-Partikel, Kohlenstoffnanoröhren, quantum wires, nanorods etc.) oder Metall-Nanopartikel. In Frage kommen auch OLED-Materialien und OLED-Schichten. Je nach Applikation kommen als emittierende Komponente neben den bereits genannten chemischen, also chromophorbasierten Systemen auch physikalische Systeme in Frage, beispielsweise Halogenlampen oder LEDs. Diese können wiederum in einer transparenten, streuenden oder absorbierenden oder lumineszierenden Matrix (beispielsweise einem Polymer) vorliegen (z.B. Halogenglühlampe oder LED eingebaut in Teflon). Ebenfalls sind Systeme einsetzbar, die physikalische und chemische Komponenten enthalten, wie z.B. Polymersysteme, die eine LED als Anregungslichtquelle und einen oder mehrere Chromophore (Emitter, Absorber, Streuer) enthalten. Denkbar sind hier auch Lumineszenzwellenleiter.

Nach einer weiteren vorteilhaften Ausführung umfassen die optischen Standardmodule zumindest ein Streumodul (auch Diffusor genannt) zur wellenlängenabhängigen oder -unabhängigen, diffusen Streuung der eintretenden Strahlung. Das Streumodul kann als Diffuserplatte oder als streuende Schicht oder Folie variabler Dicke ausgeführt sein.

Alle Farbstoff-Systeme (Emitter und Absorber und Streuer) können eingebaut in einer festen Matrix vorliegen, gebunden oder adsorbiert an eine feste Matrix oder als Lösungen oder Suspensionen (z.B. Kolloide), gefüllt in geeignete Behälter variabler Schichtdicke und Form (Küvetten, Dünnschichtküvetten, Mikrokanalsysteme etc.).

Weiterhin können die optischen Standardmodule zumindest einen Abschwächer umfassen, der eine Strahlungsintensität (im Gegensatz zu den Absorptionsstandardmodulen) im Wesentlichen wellenlängenunabhängig, d.h. gleichmäßig über den gesamten relevanten Spektralbereich abschwächt. Auf diese Weise kann die Strahlungsintensität an den Linearitätsbereich eines verwendeten Detektorsystems angepasst werden oder es kann - bei stark unterschiedlich intensiv emittierenden oder absorbierenden Modulen - deren Strahlungsintensitäten aufeinander abgestimmt werden. Der Abschwächer kann bezüglich seiner in der x,y-Ebene verlaufenden Hauptfläche (also orthogonal zur Strahlungsachse z) eine homogene Transmission bzw. Abschwächung der Strahlung bewirken oder in x- oder y-Richtung eine graduell oder stufenweise variierende Transmission bzw. Abschwächung aufweisen. Als Abschwächer werden im Allgemeinen nicht-fluoreszente Absorber eingesetzt, beispielsweise Graufilter.

Nach einer weiteren Ausgestaltung umfassen die optischen Standardmodule zumindest einen optischen Filter zur Ausblendung zumindest eines definierten wellenlängenabhängigen Spektralbereichs. Es kommen insbesondere Bandpassfilter mit hinsichtlich der spektralen Lage und Breite variablem Bandpass in Frage (beispielsweise Notch-Filter), Hochpass- oder Tiefpassfilter (auch als Cut-on- bzw. Cut-off-Filter bezeichnet) oder Kantenfilter. Daneben weisen auch schmalbandige Absorber, wie z.B. Holmium-Oxid, eine Filterfunktion auf; diese werden im Rahmen der vorliegenden Erfindung jedoch unter den Absorptionsstandards subsumiert. Ebenfalls sind in diesem Zusammenhang (schnell) sättigbare Absorber aus der Lasertechnologie bekannt, die erst ab einer bestimmten eingehenden Lichtmenge öffnen, sowie optische Schalter, beispielsweise Spiro-Verbindungen.

Nach einer weiteren Ausführung der Erfindung umfassen die optischen Standardmodule zumindest ein Spiegelmodul, das eine auf ihn fallende Strahlung teilreflektiert oder im Wesentlichen totalreflektiert.

Weiterhin können die optischen Standardmodule zumindest eine Maske umfassen, die in zumindest einer entlang ihrer Hauptflächen verlaufenden x,y-Richtung unterschiedliche Abschnitte aufweist, die ausgewählt sind aus reflektierenden oder totalabsorbierenden Abschnitten, materialfreien Abschnitten (also Löcher oder Aperturen), Streuabschnitten, Spiegelabschnitten und Abschwächerabschnitten.

Für Applikationen in Kombination mit ortsauflösenden optischen Messmethoden, wie der Fluoreszenzmikroskopie, ist auch die Kombination mit absorbierenden, emittierenden (fluoreszierenden) oder reflektierenden Strukturen (Strukturelemente im nm- bis cm-Bereich) vorteilhaft. Die als Maske fungierenden optischen Strukturkomponenten (z.B. ein auf einem Quarz-, Glas- oder Polymer-Substrat aufgedampfter Metallfilm) können entweder zur Bestimmung der Ortsauflösung in x,y-Richtung dienen oder beispielsweise zur Anpassung an bestimmte Probenformate wie Mikrotiterplatten (Well-Struktur) oder der Modellierung dieser Probenformate.

Weitere optische Standardmodule umfassen Lochblenden verschiedener Apertur und Polarisatoren.

Mit besonderem Vorteil kann der erfindungsgemäße Standard in Form eines Kits zur Verfügung gestellt sein, welches eine Mehrzahl separater unterschiedlicher planparallel miteinander verbindbarer, schichtförmiger optischer Standardmodule umfasst, die geeignet sind, mit einer auf einer ihrer beiden Hauptflächen auftreffenden elektromagnetischen Strahlung in physikalische Wechselwirkung zu treten und die sich jeweils durch mindestens eine optische Eigenschaft voneinander unterscheiden, nämlich durch ihre Absorptions-, Emissions-, Streu- und/oder Reflexionseigenschaften. Dabei sind die Standardmodule ausgewählt sind aus der vorstehend beschriebenen Gruppe umfassend:
- (chromophorbasierte oder physikalische) Emissionsstandardmodule zur Emission eines Lumineszenzspektrums,
- Absorptionsstandardmodule zur wellenlängenabhängigen Absorption der Strahlung,
- Streumodule zur wellenlängenabhängigen oder -unabhängigen, diffusen Streuung von Strahlung,
- Abschwächer zur im Wesentlichen wellenlängenunabhängigen Abschwächung einer Strahlungsintensität mit einer homogenen Transmission oder einer entlang ihrer Hauptflächen graduell oder stufenweise variierenden Transmission,
- optische Filter zur Ausblendung zumindest eines definierten wellenlängenabhängigen Spektralbereichs,
- Spiegelmodule, welche die Strahlung teil- oder im Wesentlichen totalreflektieren, und
- Masken, die in zumindest einer entlang ihrer Hauptflächen verlaufenden x,y-Richtung Abschnitte unterschiedlicher optischer Eigenschaften aufweisen, die ausgewählt sind aus reflektierenden oder totalabsorbierenden Abschnitten, Aperturabschnitten, Streuabschnitten, Spiegelabschnitten und Abschwächerabschnitten.

Ein weiterer Aspekt der vorliegenden Erfindung betrifft die Verwendung des erfindungsgemäßen optischen Standards zur spektralen Kalibrierung und/oder zur Charakterisierung einer optischen Messeinrichtung. Bei dieser kann es sich um spektral oder integral messende Lumineszenzmesssysteme, um Absorptions- und Reflexionsmesssysteme (UV/vis/IR), um Ulbrichtkugel-Messeinrichtrungen (UV/vis/IR; z.B. für Messung streuender Proben), um IR- und Raman-(Mikro)spektrometer, um Mikroskope (Transmission, Lumineszenz, Raman, IR) und um optische Mikrotiterplattenauslesegeräte handeln. Insbesondere jegliche Lumineszenz- und von diesen Fluoreszenzmesseinrichtungen, beispielsweise Fluoreszenzspektrometer, Mikrofluorometer, Mikrotiterplattenauslesegeräte, konfokale bildgebende Systeme und scannende bildgebende Systeme (Imaging-Systeme) wie Fluoreszenzmikroskope und Laserscanner für die Mikroarraytechnologie, lassen sich mit Vorteil unter Verwendung des Standards kalibrieren und/oder charakterisieren.

Spezielle Verwendungszwecke betreffen die rückführbare Kalibrierung (d.h. die Ermittlung der (relativen) spektralen Empfindlichkeit), die Ermittlung der Wellenlängenrichtigkeit und des spektralen Auflösungsvermögens der Messeinrichtung sowie den Einsatz als Intensitätsstandard und als Standard zur Ermittlung des Linearitätsbereichs des Detektionssystems.

Der erfindungsgemäße optische Sandwich-Standard kann als eigenes Bauteil vorliegen, das in Standardprobenhalterungen einsetzbar ist, oder integriert in andere Charakterisierungs- und Kalibrierwerkzeuge für optische Messsysteme eingesetzt werden. Beispielsweise ist es vorteilhaft möglich, einen miniaturisierten Sandwich-Standard oder mehrere miniaturisierte Sandwich-Standards integriert in einer festen Matrix (z.B. aus Glas oder einem Polymer) in Form eines Objektträgers oder eines Mikrokanalsystems als Kalibrierwerkzeug für Messsysteme für das Auslesen von Mikroarrays oder für Mikroskope einzusetzen. Dies gestattet auch die Kombination mit weiteren integrierten Charakterisierungs- und Kalibrierhilfsmitteln, beispielsweise gedruckten, gespotteten oder gesputterten Chromophoren oder Fokussierhilfen oder im Falle von Mikrokanalsystemen auch mit Farbstoffen gefüllten oder versehenen Strukturen. Die Chromophore können einzeln oder in Kombination mehrerer Chromophore, ungekapselt oder gekapselt vorliegen, wie z.B. in Form ein- und mehrfarbig dotierter Partikel, aus anorganischen, organischen oder anorganisch-organsichen Materialien aufgebauten Farbstoffschichten etc..

Eine weitere Verwendung des erfindungsgemäßen optischen Standards betrifft seinen Einsatz in einem Barcode-System. Wie in der vorgenannten Ausführung liegt in diesem Fall der insbesondere miniaturisierte Sandwich-Standard oder mehrere Sandwich-Standards in einer festen Matrix z.B. aus Glas oder Kunststoff vor, welche als Objektträger für ein Mikroskop oder eine ein Mikrokanalsystem enthaltende Platte ausgestaltet sein kann und die einen z.B. aufgedruckten Barcode aufweist.

Weitere vorteilhafte Ausgestaltungen sind Gegenstand der unabhängigen Ansprüche.

### Ausführliche Beschreibung der Erfindung

Die Erfindung wird nachfolgend in Ausführungsbeispielen anhand der zugehörigen Figuren näher erläutert. Es zeigen
- Figur 1A: eine Seitenansicht eines optischen Standards gemäß einer vorteilhaften Ausgestaltung der Erfindung;
- Figur 1 B: eine perspektivische Vorderansicht eines in einem erfindungsgemäßen optischen Standard verwendeten optischen Standardmoduls;
- Figur 2A+2B: zwei mögliche Messanordnungen des optischen Standards aus Figur 1A;
- Figuren 3-10: optische Standards gemäß verschiedenen vorteilhaften Ausgestaltungen der Erfindung;
- Figur 11: Emissionsspektren von typischen schmalbandig (NBE) und breitbandig (BBE) emittierenden Emittern, hiervon anorganischen Chromophoren in Glasmatrices;
- Figur 12: Absorptions- und Emissionsspektren von verschiedenen organischen spektralen Fluoreszenzstandards gemäß DE 10 2004 044 717 A zur Ermittlung der relativen spektralen Empfindlichkeit von Fluoreszenzmesssystemen und zur Ermittlung der Linearität des Detektionssystems;
- Figur 13: Absorptionsspektren (oben) und Emissionsspektren (unten) von im NIR-Spektralbereich emittierenden PbS-Nanokristallen unterschiedlicher Größe in Toluol angeregt bei 405 nm;
- Figur 14: Emissionsspektrum einer Kombination aus drei breitbandig absorbierenden und emittierenden Chromophoren in Ethanol und deren Einzelspektren angeregt bei 405 nm;
- Figur 15: Emissionsspektrum einer breitbandig im NIR absorbierenden und emittierenden Cyaninverbindung gemäß DE 10 2008 040 513.2 in Ethanol angeregt bei 405 nm; und
- Figur 16: Absorptions- und Emissionsspektren von zwei typischen organischen Emittern in einer Polymermatrix angeregt bei 488 nm.

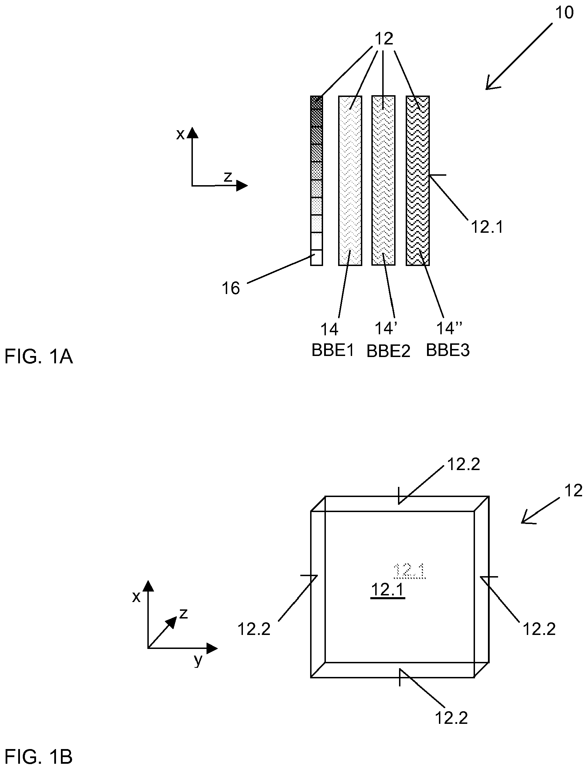

Figur 1A zeigt einen optischen Standard 10 gemäß einer vorteilhaften Ausgestaltung der vorliegenden Erfindung. In dieser Darstellung sind - wie auch in den folgenden - die einzelnen modularen Komponenten (Standardmodule 12) des erfindungsgemäßen optischen Standards 10 mit einem Abstand zueinander gezeigt. Es versteht sich jedoch, dass die einzelnen Komponenten, die alle eine im Wesentlichen schicht- oder scheibenförmige Gestalt und vorzugsweise auch übereinstimmende Kantenlängen bezüglich ihrer Hauptflächen aufweisen, mit ihren Hauptflächen planparallel unmittelbar aneinander angrenzend angeordnet und miteinander verbunden sind. Dies kann etwa durch ganzflächiges oder teilflächiges Verkleben oder Verschweißen erfolgen. Bevorzugt ist allerdings ein lösbares Fixieren der optischen Standardmodule 12 miteinander, beispielsweise mit Klammern oder Magnethalterungen.

Erfindungsgemäß weist der optische Standard 10 eine Kombination von mindestens zwei optischen Standardmodulen 12 auf, die - abhängig von einer gewünschten Anwendung - jeweils definierte optische Eigenschaften aufweisen, insbesondere ein bekanntes und charakterisiertes Absorptions-, Emissions- oder Streu- und/oder Reflexionsverhalten. Dabei unterscheiden sich die Standardmodule 12 jeweils durch mindestens eine optische Eigenschaft voneinander, nämlich durch ihre Absorptions-, Emissions-, Streu- und/oder Reflexionseigenschaften. Die eingesetzten Standardmodule 12 sind so beschaffen und aufeinander abgestimmt, dass eine auf die eine der beiden Hauptflächen 12.1, die im Rahmen der vorliegenden Erfindung als die entlang der x,y-Ebene verlaufenden Flächen verstanden werden (s.a. Fig. 1 B), auftreffende Strahlung mit dem optischen Standardmodul 12 bzw. seinem Material in physikalische Wechselwirkung tritt, um so selbst eine detektierbare Modulation seiner spektralen Eigenschaften und/oder seiner Intensität zu erfahren und/oder das optische Material des optischen Standardmoduls 12 zu einer Emission einer elektromagnetischen Strahlung anzuregen. Diese physikalische Wechselwirkung kann als wellenlängenabhängige oder -unabhängige Absorption (ggf. mit einer hierdurch verursachten Reemission ), wellenlängenabhängige oder -unabhängige Streuung und/oder als Teil- oder Totalreflexion stattfinden.

Figur 1B zeigt zur Verdeutlichung des Begriffs "Hauptfläche(n)" ein einzelnes optisches Standardmodul 12 in einer perspektivischen Sicht auf eine der beiden Hauptflächen 12.1. Dabei werden vorliegend die beiden flächenmäßig größten Flächen der schichtförmigen Standardmodule 12 als Hauptflächen bezeichnet, während die vier in Figur 1B seitlich dargestellten Seitenflächen 12.2. eine wesentlich kleinere Flächen aufweisen. Ferner wird unter "schicht- oder scheibenförmig" eine äußere Gestalt verstanden, die zwei flächenmäßig dominierende und planparallel zueinander angeordnete Hauptflächen 12.1 umfasst, während eine äußere Kontur beliebig gestaltet sein kann, etwa wie hier viereckig oder rund. Im einge-bauten Zustand des Standardmoduls 12 trifft eine von einer Lichtquelle der Messeinrichtung emittierte Strahlung entlang der z-Achse im Wesentlichen orthogonal auf eine der beiden Hauptflächen, um die bereits erwähnte Wechselwirkung mit dem Material des Standardmoduls 12 einzugehen.

Da eine Wechselwirkung der Strahlung mit sämtlichen eingesetzten optischen Standardmodulen 12 erwünscht ist, sind diese so beschaffen, angeordnet und aufeinander abgestimmt , dass sie zumindest teildurchlässig für die verwendete Strahlung sind, so dass auch das im Strahlungsweg hinterste optische Standardmodul 12 von der Strahlung erreicht wird.

Bei den optischen Standardmodulen 12 kann es sich im Allgemeinen um ein Absorptionsstandardmodul oder eine Kombination mehrerer Absorptionsstandardmodule handeln, die sich durch ein definiertes (bekanntes) wellenlängenabhängiges Absorptionsspektrum auszeichnen, wobei abhängig von der Art der zu charakterisierenden oder kalibrierenden Messeinrichtung die Absorptionsbanden eines Absorptionsstandardmoduls im UV-, vis-, NIR- oder IR-Spektralbereich liegen können, so dass sie in UV-, UV/vis-, (FT)IR- oder Ramanspektrometern sowie Lumineszenzmesssystemen eingesetzt werden können.

Darüber hinaus kann es sich bei den optischen Standardmodulen 12 um ein Emissionsstandardmodul oder eine Kombination mehrerer Emissionsstandardmodule handeln, die ein Material aufweisen oder aus diesem bestehen, das nach Anregung durch eine geeignete Strahlung in einen angeregten Zustand übergeht und bei der Rückkehr in den Grundzustand die absorbierte Energie als Photolumineszenz, d.h. als Phosphoreszenz oder Fluoreszenz, wieder abgibt. Somit weisen die Emissionsstandardmodule jeweils ein definiertes Emissionsspektrum auf, deren Emissionsbanden ähnlich wie bei den Absorptionsstandardmodulen im UV-, vis-, NIR- oder IR-Spektralbereich liegen können und auf diese Weise Anwendung in Lumineszenzmesseinrichtungen, insbesondere Fluoreszenzmesseinrichtungen finden können.

Es können weitere Standardmodule 12 eingesetzt und insbesondere mit den Emissions- und/oder Absorptionsstandardmodulen kombiniert werden, beispielsweise Streuer (auch Diffusor genannt), Abschwächer, Filter, teil- oder undurchlässige Spiegel sowie Masken, welche verschiedene der vorgenannten Elemente in abschnittsweiser Verteilung in x,y-Ebene aufweisen. Diese werden nachfolgend noch näher erläutert. Es ist jedoch bevorzugt vorgesehen, zumindest ein Emissionsstandard- und/oder einen Absorptionsstandardmodul in dem erfindungsgemäßen optischen Standard 10 einzusetzen.

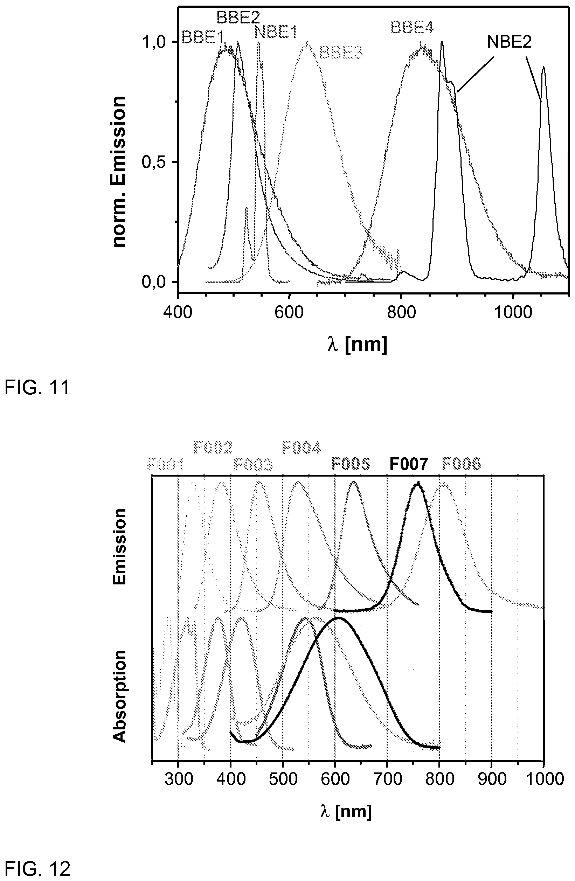

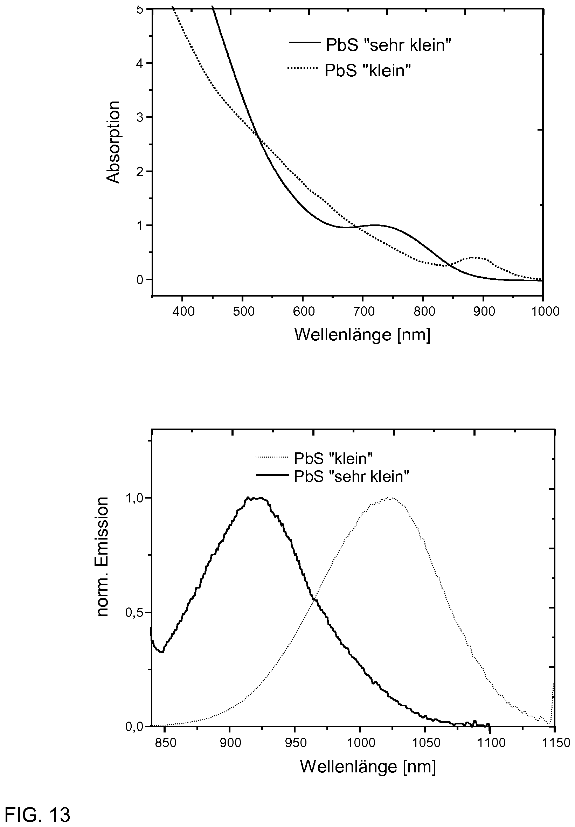

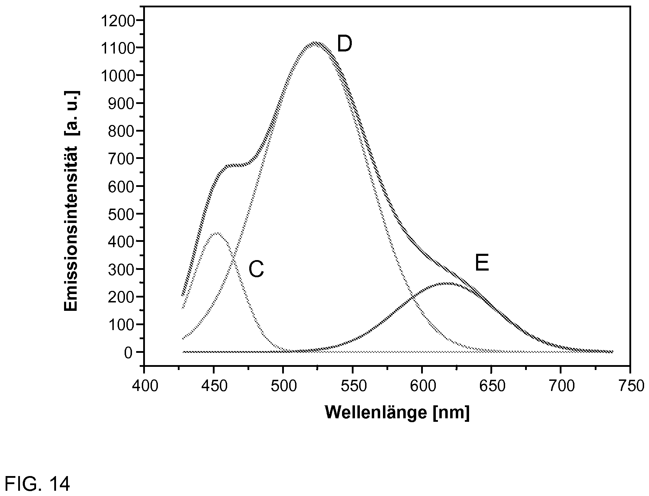

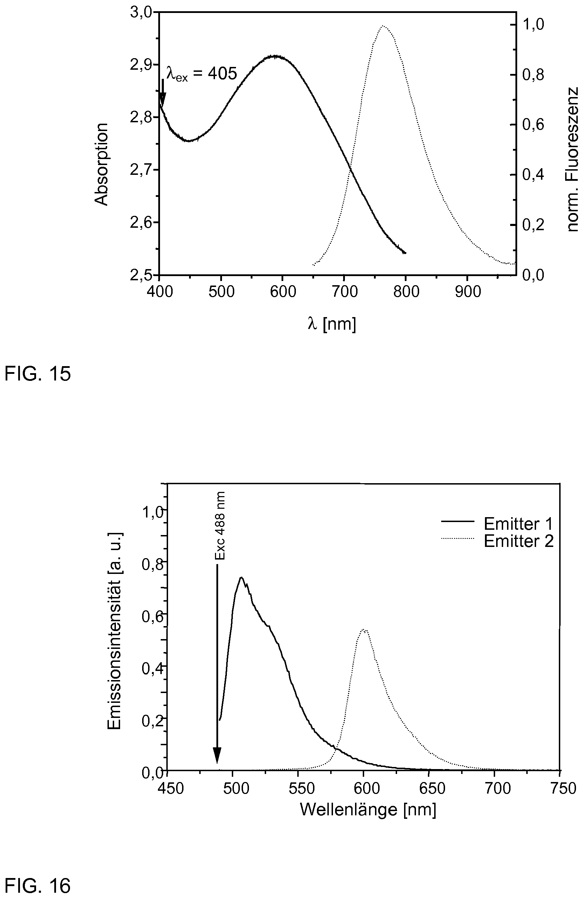

In dem in Figur 1A dargestellten Beispiel umfasst der hier als spektraler Fluoreszenzstandard einsetzbare optische Standard 10 insgesamt drei miteinander kombinierte Emissionsstandardmodule 14, 14' und 14", die hier insbesondere als breitbandig emittierende Standards BBE1, BBE2 und BBE3 ausgestaltet sind. Dabei werden die in diesem Beispiel als chromophorbasierte (chemische) Breitbandemitter realisierten Chromophore vorzugsweise so gewählt, dass ihre kombinierten Emissionen möglichst große Teile des UV/vis/NIR-Spektralbereichs abdecken und idealerweise bei einer einzigen Anregungswellenlänge angeregt werden können. Beispiele für Emissionsspektren anorganischer, in Glasmatrices vorliegender Chromophore, die für diese Applikation einsetzbar sind, sind in Figur 11 (siehe dort die Breitbandemitter BBE1, BBE2 etc.) gezeigt, während Figur 12, oberer Teil (siehe dort z.B. die Emitter F003, F004, F005) und Figur 14 die Emissionsspektren geeigneter organischer Chromophore in Lösung zeigen. Ebenso lassen sich - auch in Kombination mit den vorgenannten - nanokristallinen Substanzen, wie PbS in Polystyrol einsetzen, deren spektrale Lage der Emissionsbanden in einem weiten NIR-Bereich über die Partikelgröße eingestellt werden kann (Figur 13 unten). Soll der Spektralbereich der Emission in den NIR-Bereich ausgedehnt werden, kann insbesondere auch der in den Figur 15 gezeigte NIR-Farbstoff mit anderen Chromophoren oder Standards kombiniert werden.

Der gezeigte erfindungsgemäße optische Standard 10 wird insbesondere verwendet, um eine spektrale Kalibrierung des verwendeten Messsystems vorzunehmen. Hierfür wird mit dem zu kalibrierenden Messsystem ein Emissionsspektrum des Standards 10 gemessen, das sowohl die standardspezifischen als auch die gerätespezifischen spektralen Anteile aufweist, und das gemessene Spektrum durch das bekannte Standardspektrum geteilt. Die so erhaltene Korrekturfunktion beinhaltet alle gerätebedingten spektralen Anteile. Wird nachfolgend ein Emissionsspektrum einer unbekannten Probe mit dem Messsystem aufgenommen, muss dieses Spektrum lediglich mit dem Korrekturspektrum multipliziert werden, um die gerätebedingten spektralen Anteile herauszurechnen.

Der in Figur 1A dargestellte Standard 10 umfasst neben den beispielsweise drei Emissionsstandardmodulen 14, 14', 14" ferner einen Abschwächer 16, der eine Anpassung der Fluoreszenzintensität an den linearen Messbereich des zu charakterisierenden Fluoreszenzmesssystems vornimmt. Insbesondere kann ein multifunktionaler, in x-Richtung (oder y-Richtung) variabler Abschwächer verwendet werden, der aus mehreren in der x,y-Ebene benachbart angeordneten Abschwächern abgestufter Transmission entlang der x-Achse besteht. Alternativ kann ein solcher variabler Abschwächer durch einen beispielsweise streifenförmigen Abschwächer realisiert sein, der an ausgewählten Positionen entlang der x,y-Ebene verschiebbar angeordnet werden kann. Durch den Einsatz eines (variablen) Abschwächers 16 kann der Standard 10 - neben der oben erläuterten spektralen Korrektur - verwendet werden, um den Linearitätsbereich des Detektionssystems über einen sehr breiten Spektralbereich zu bestimmen. Ebenso kann auf diese Weise die Intensität des Standards bzw. die Intensitäten einzelner Standardmodule definiert eingestellt werden.

Alternativ kann anstelle des Abschwächers 16 z.B. ein Bandpass-Filter mit in x-Richtung (oder y-Richtung) variabler spektraler Lage des Bandpasses verwendet werden, um so Strukturen im resultierenden Mischspektrum der Emitter zu erzeugen. Durch die Kombination von emittierenden Farbstoffen mit Bandpass- oder Kantenfiltern können aus beliebig strukturierten oder breitbandigen Emissionsspektren Spektren mit variabler Form in verschiedenen Spektralbereichen erzeugt werden (Spectral Shaping). Damit ist auch eine spektral angepasste oder wellenlängenselektive Intensitätssteuerung möglich. Wird ein bekannter Standard (Fluoreszenz) in einem komplexen Schichtsystem verwendet, wird seine spektrale Charakteristik beeinflusst, wenn sich ein Absorptionsspektrum einer Schicht mit einem Lumineszenzspektrum einer anderen Schicht überschneidet. Es ergibt sich damit automatisch die Möglichkeit des gezielten "Spectral Shaping". Soll der Einfluss der Absorption minimiert werden, müssen dünne Schichten verwendet werden.

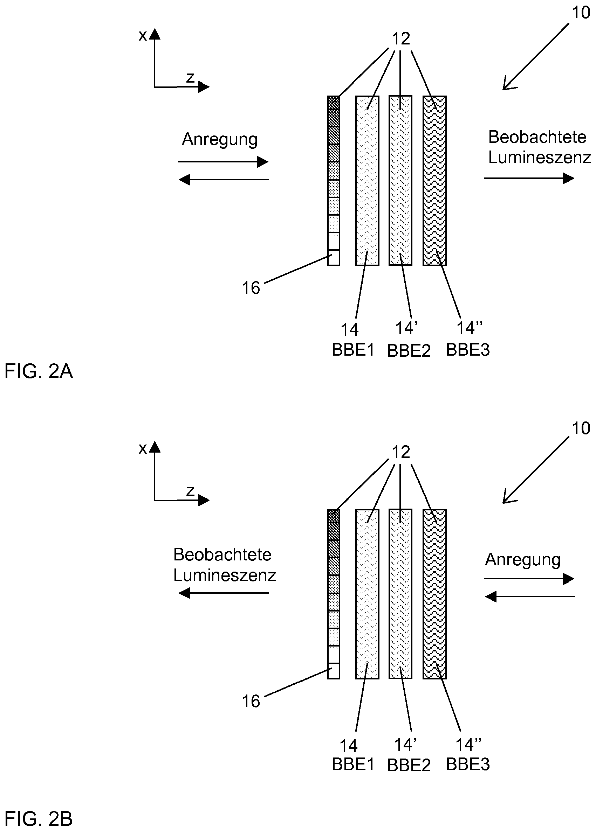

Ein besonderer Vorteil des erfindungsgemäßen optischen Standards 10 ist seine Eignung, in beide Richtungen eingesetzt zu werden, d.h. aus +z- oder -z-Richtung bestrahlt und/oder beobachtet zu werden. Dies ist in den Figuren 2A und 2B für den optischen Standard 10 aus Figur 1A dargestellt. Dabei erfolgt in Figur 2A die Einstrahlung in -z- bzw. +z-Richtung und die Beobachtung der (in alle Richtungen erfolgenden) Lumineszenz in -z-Richtung. Entsprechend der gewählten Anregungsrichtung ist dies die Transmission- bzw. Reemissions-Richtung. Auf der anderen Seite findet in Figur 2B die Einstrahlung in -z- bzw. +z-Richtung statt, während die Beobachtung der Lumineszenz in +z-Richtung erfolgt. Dabei wird gemäß der hier verwendeten Definition stets entgegen der Ausbreitungsrichtung der Lumineszenz beobachtet. Diese variable Messanordnung ermöglicht den Einsatz in unterschiedlichen Messgeometrien, um so für kontrolliert einstellbare Spektralbereiche und Spectral Pattern unterschiedliche Intensitäten oder Intensitätsverhältnisse zu liefern.

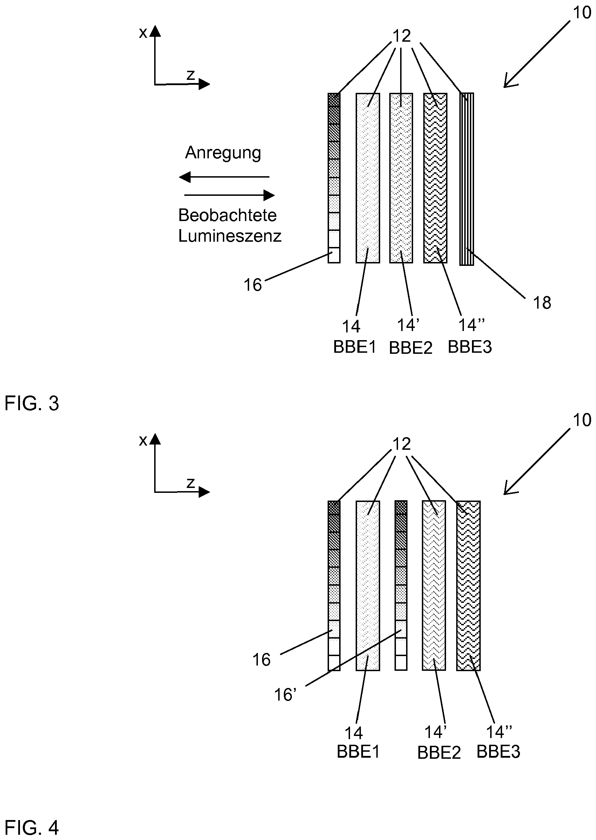

Eine Abwandlung des in den Figuren 1 und 2 gezeigten Standards 10 ist in Figur 3 dargestellt. Hier weist der Standard 10 zusätzlich zu der Kombination aus den Breitbandemittern (Emissionsstandards 14, 14', 14") und dem Abschwächer 16 einen (im Wesentlichen totalreflektierenden) Spiegel 18 auf. Auf diese Weise kann die gleiche Emissionsstandardkombination auch in Messgeometrien eingesetzt werden, in denen die Anregung in +z-Richtung erfolgt und die Detektion der reflektierten und reemittierten Lumineszenzstrahlung in -z-Richtung (so genannte 0°/360°-Geometrie). Durch die Totalreflexion der Lumineszenz und der Anregungsstrahlung an dem Spiegel 18 werden die beobachteten Intensitäten verstärkt.

Eine weitere Abwandlung eines als spektraler Fluoreszenzstandard und/oder als Intensitätsstandard einsetzbaren optischen Standards 10 mit drei Emissionsstandards 14, 14', 14", die wiederum als breitbandig emittierende Chromophore BBE1, BBE2 und BBE3 ausgestaltet sind, zeigt Figur 4. Der Standard 10 weist ebenso wie der in Figur 1A gezeigte einen ersten, in Strahlungsrichtung vorgeschalteten Abschwächer 16 auf. Zusätzlich ist ein zweiter Abschwächer 16' zwischen dem ersten Emissionsstandard 14 und dem zweiten Emissionsstandard 14' vorgesehen. Auf diese Weise können beispielsweise bei sehr unterschiedlich stark emittierenden Standards die Intensitäten der verschiedenen Emitter aufeinander angepasst werden oder es können definierte Intensitätsverhältnisse der Emitter eingestellt werden, um letztlich konstante Intensitätsverhältnisse von verschiedenen Emittern zu erhalten. Sollen die spektralen Profile der Emissionen der Emitter angepasst werden, so können anstelle oder zusätzlich zu den Abschwächern 16, 16' auch Bandpass-Filter verwendet werden, deren Transmission eine sehr starke Wellenlängenabhängigkeit in einem engen Spektralbereich aufweist. Auch bei der in Figur 4 gezeigten Ausgestaltung sind die verschiedenen Messanordnungen und Varianten gemäß den Figuren 2A, 2B und 3 realisierbar.

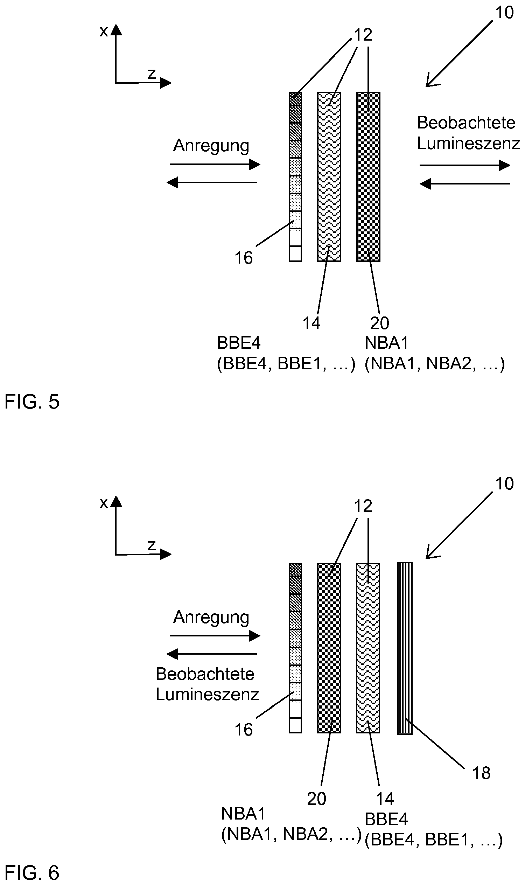

Ein anderes Prinzip eines optischen Standards 10 gemäß der vorliegenden Erfindung, der als spektraler Fluoreszenzstandard und/oder als Intensitätsstandard eingesetzt werden kann, ist in Figur 5 dargestellt. Hier ist ein breitbandig emittierendes Emissionsstandardmodul 14 (BB4) mit einem schmalbandig absorbierenden Absorptionsstandardmodul 20 (NBA1), beispielsweise in Form eines Holmiumoxid-Glases, kombiniert. Die beiden Module sind dabei so gewählt, dass zumindest eine schmale Absorptionsbande des schmalbandig absorbierenden Chromophors des Absorptionsstandardmoduls 20 mit zumindest einer breiten Bande des Emissionsstandardmoduls 14 spektral überlappt. Das resultierende Gesamtspektrum des Standards 10 weist somit zumindest eine breite Bande mit zumindest einer relativ scharfen Absorptionslinie auf. Auf diese Weise lassen sich durch geschickte Ausnutzung und Kombination der Emissionen von geeigneten Emissionsstandards und der Absorption der emittierten Strahlung durch geeignete Absorptionsstandards beliebig strukturierte Spektren darstellen. Als breitbandiger Emissionsstandard 14 kann auch (wie in Figur 1A) eine Kombination mehrerer Breitbandemitter (BBE1, BB2, ...) oder auch ein physikalischer Standard, beispielsweise eine Halogenlampe, eingesetzt werden. Ebenso können mehrere schmalbandige Absorber mit vielen verschiedenen Absorptionslinien zu einem Fluoreszenzstandard mit einem über einen breiten Spektralbereich strukturierten Emissionsspektrum mit linienförmigen Banden kombiniert werden, dessen Intensität über einen oder mehrere Abschwächer 16 (ggf. mit variabler Abschwächung entlang x-Achse) gesteuert werden kann. Werden anstelle der Abschwächerkombination 16 Bandpassfilter verwendet, kann zudem das Intensitätsverhältnis der einzelnen Banden zueinander reguliert und definiert eingestellt werden.

Die in Figur 5 dargestellte Anordnung kann in Transmissions- und Reemissions-Anodnung eingesetzt werden. Um die sich in +z-Richtung ausbreitende Lumineszenz in -z-Richtung als unstrukturiertes Spektrum zu beobachten, wird in +z-Richtung angeregt. In dieser Anordnung kann ebenso die Reemission (Lumineszenzausbreitung in -z-Richtung) in +z-Beobachtungsrichtung detektiert werden. Wird in -z-Richtung angeregt, kann in der +z-Beobachtungsrichtung ein strukturiertes, durch den Filter abgeschwächtes Lumineszenzspektrum detektiert werden, entsprechend kann in der Reemissionsanordnung (-z Beobachtungsrichtung) wiederum ein nicht strukturiertes Lumineszenzspektrum aufgenommen werden, welches keine Abschwächung durch Filter erfahren hat. (Beobachtet wird die Lumineszenzstrahlung stets entgegen ihrer Ausbreitungsrichtung.) Die Kombination kann etwa als Standard (spektraler Standard, Intensitätsstandard sowie Quantenausbeutestandard) zur Charakterisierung von Ulbricht-Kugel-Systemen Anwendung finden.

Eine Abwandlung des Standards gemäß Figur 5 zeigt Figur 6. In diesem Fall umfasst der Standard 10 (in dieser Reihenfolge) einen (ggf. abgestuften) Abschwächer 16, einen oder mehrere schmalbandig absorbierende Absorptionsstandardmodule 20, einen oder mehrere breitbandig emittierende Emissionsstandardmodule 14 sowie als im Strahlungsweg letztes Modul 20 einen Spiegel 18, so dass die Beobachtung in +z-Richtung erfolgt (Lumineszenzausbreitung in -z-Richtung). Diese Anordnung kann beispielsweise in Mikroskopen oder Mikrotiterplattenauslesegeräten Verwendung finden oder in anderen konfokalen und scannenden bildgebenden Systemen.

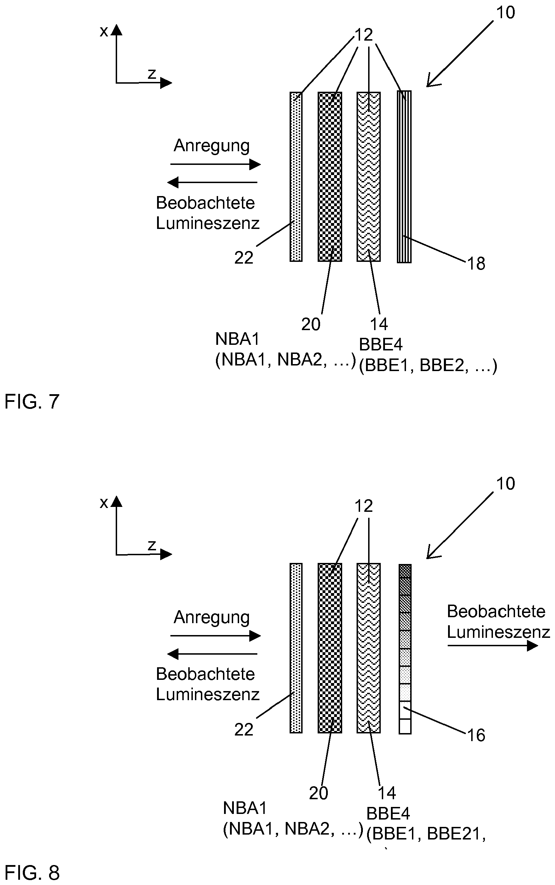

Eine weitere Abwandlung des Standards aus Figur 6 ist in Figur 7 zu sehen, wo anstelle des Abschwächers 16 ein Streumodul (Diffusor) 22 angeordnet ist, das eine homogene Ausleuchtung von Standard 10 und Probenraum gewährleistet. Damit können neben Inhomogenitäten der Ausleuchtung auch Anisotropie-Effekte des Standards deutlich reduziert werden. Außerdem werden Effekte der Anregungsstrahlgeometrie reduziert, d.h. der Standard wird unempfindlich gegenüber der Anregungsgeometrie (z.B. bei Anregung mit fokussiertem Licht). Alternativ können auch mehrere Diffusoren 22 und/oder Kombinationen aus Diffusoren und Abschwächern 16 an unterschiedlichen Orten entlang der z-Achse angeordnet sein. Diffusoren können in vorteilhafter Weise auch in Kombinationen mit den anderen in den Figuren 1-6 und 8-12 gezeigten optischen Standards 10 eingesetzt werden.

Der optische Standard 10 gemäß Figur 8 zeigt eine Erweiterung des Standards 10 aus Figur 5, der zusätzlich zu diesem ein Streumodul (Diffusor) 22 zur Homogenisierung der Ausleuchtung aufweist. Die Lumineszenz kann aus beiden Richtungen beobachtet werden. Ebenso wie in Figur 7 kann der Diffusor 22 auch anders positioniert werden, etwa zwischen den Modulen 14 und 20. Auch können statt des Absorptionsstandardmoduls 20 ein oder mehrere weitere Emissionsstandardmodule 14 eingesetzt werden oder verschiedene Abschwächer 16 an unterschiedlichen Positionen analog Figur 4.

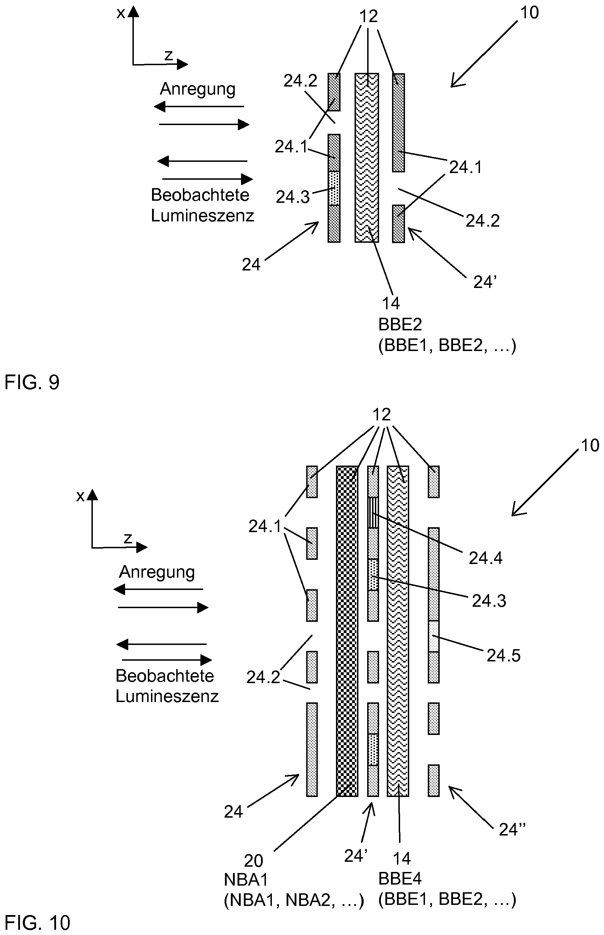

In Figur 9 ist ein Emissionsstandard 14, insbesondere ein breitbandig emittierender Emitter BBE2 oder eine Kombination von mehreren solcher Emitter, zwischen zwei Masken 24 und 24' angeordnet, die entlang der x,y-Ebene unterschiedliche Abschnitte mit unterschiedlichen optischen Eigenschaften und Funktionen aufweisen. Insbesondere weisen die Masken 24, 24' Abschnitte 24.1 mit einseitig oder beidseitig (d.h. auf einer oder auf beiden Hauptflächen 12.1) reflektierenden oder absorbierenden Materialien oder Beschichtungen mit solchen auf, welche materialfreie Abschnitte 24.2, also Aperturen, begrenzen. Somit ist die Maske an Orten auf der x,y-Ebene mit reflektierenden oder absorbierenden Abschnitten 24.1 praktisch vollständig strahlungsundurchlässig und and den materialfreien Abschnitten 24.2 praktisch vollständig strahlungsdurchlässig.

Reflektierende Beschichtungen können beispielsweise durch Silberschichten realisiert werden, während absorbierende Schichten, die im Gegensatz zu den Absorptionsstandardmodulen 20 im gesamten interessierenden Wellenlängenbereich praktisch vollständig absorbieren, beispielsweise durch schwarze Kohlenstoffschichten oder in verschiedene Matrices inkorporierten Kohlenstoff, Carbonnanotubes, "schwarze" nichtfluoreszierende Farbstoffe (z.B. NPL-Schwarz) oder Farbstoff-Schichten oder eine Eloxierung realisiert werden können. Darüber hinaus können die Masken 24 Abschnitte aufweisen, die als Diffusor, Abschwächer oder Spiegel unterschiedlich starker Transmission ausgestaltet sind. Exemplarisch ist in Figur 9 ein als Diffusor ausgeführter Abschnitt 24.3 der Maske 24 dargestellt.

Der optische Standard gemäß Figur 10 weist neben einer Kombination zumindest eines schmalbandig absorbierenden Absorptionsstandards 20 (NBA1) und zumindest eines breitbandig emittierenden Emissionsstandards 14 (BBE4) drei Masken 24, 24', und 24" auf, die neben den reflektierenden und (total)absorbierenden Abschnitten 24.1 materialfreie Abschnitte 24.2 (Aperturen) sowie Diffusorabschnitte 24.3, Spiegelabschnitte 24.4 und Abschwächerabschnitte 24.5 aufweisen. Anstelle des Absorptionsstandardmodulss 20 kann auch ein Emissionsstandardmodul oder eine Kombination mehrerer Emissionsstandardmodule vorgesehen sein.

Die Standards gemäß den Figuren 9 und 10 können in Transmission und Reflexion angewendet werden. Die Masken lassen sich auch in Kombination mit den vorstehend beschriebenen Standards einsetzen.

Die vorstehend lediglich beispielhaft beschriebenen Ausführungen des optischen Standards 10 gemäß der vorliegenden Erfindung belegen die vielfältigen Einsatz- und Variationsmöglichkeiten. Sie lassen sich vielfach in zwei Richtungen verwenden, d.h. sowohl in +z- als auch -z-Richtung bestrahlen und/oder beobachten, wobei zum Teil Eigenschaften des Standards richtungsabhängig eingestellt werden können. Dabei lassen sich durch geeignete Auswahl von Emissions- und/oder Absorptionsstandardmodulen gegebenenfalls kombiniert mit weiteren modularen Komponenten, wie Abschwächern, Diffusoren, Spiegeln und/oder Masken nahezu beliebig modulierte Gesamtspektren erzeugen, insbesondere Emissionsspektren.

Einige Beispiele für Emissionsspektren unterschiedlichster Chromophore, die mit Vorteil in Emissionsstandardmodulen 14 und zum Teil auch in Absorptionsstandardmodulen 20 Einsatz finden können, sind in den nachfolgenden Figuren 11 bis 16 dargestellt, die teilweise bereits im Zusammenhang mit den vorstehend diskutierten Standards 10 erwähnt wurden.

So zeigt Figur 11 Emissionsspektren von typischen anorganischen schmalbandigen Emittern (NBE1 und NBE2) und breitbandigen Emittern (BBE1...4), die in Glasmatrices vorliegen. Hingegen sind in Figur 12 die Absorptions- und Emissionsspektren von verschiedenen breitbandig emittierenden organischen spektralen Emissionsstandards (Fluoreszenzstandards) in Lösung (Ethanol im Falle von F001-F005 und F007 und Acetonitril für F006) gezeigt, die in DE 10 2004 044 717 A offenbart sind und deren Einsatz im Rahmen der vorliegenden Erfindung ausdrücklich eingeschlossen ist. Aufgrund ihrer glatten und breiten Bandenverläufe ihrer Emissions- und Absorptionsspektren sowie ihrer Abdeckung eines breiten Spektralbereichs eignen sich diese Farbstoffe zur Ermittlung der relativen spektralen Empfindlichkeit von Fluoreszenzmesssystemen und zwar sowohl für die Emissions- als auch für die Anregungskorrektur und zur Ermittlung der Linearität des Detektionssystems. Werden Kombinationen dieser Fluorophore als Emissions- oder Absorptionsstandards in einem optischen Standard gemäß der vorliegenden Erfindung eingesetzt, kann die spektrale Empfindlichkeit des Messsystems über die gesamte gezeigte Spektralbreite mit nur einer einzigen Messung oder einer geringen Anzahl von Messungen ermittelt werden. Zudem können annähernd beliebig strukturierte oder modulierte Spektren erzeugt werden z.B. durch die Kombination mit schmalbandigen Emittern oder Absorbern oder Filtern (spectral Shaping), die für vielfältige Charakterisierungsanwendungen angewendet werden können, z.B. für die Applikation als Standard zur Überprüfung der Wellenlängenrichtigkeit und der spektralen Auflösung oder als Day-to-day-Intensitätsstandard oder spektral angepasster Intensitätsstandard.

Figur 13 zeigt Absorptionsspektren (oben) und Emissionsspektren (unten) von nanometergroßen im NIR-Spektralbereich emittierenden kommerziell erhältlichen PbS-Nanokristallen in zwei unterschiedlichen Größen ("sehr klein" und "klein"), angeregt bei 405 nm. Die Nanokristalle liegen vorzugsweise in kolloidaler "Lösung" vor, hier in Toluol, bei der sich die sterisch oder elektrostatisch stabilisierten Feststoffpartikel nicht absetzen. Prinzipiell können PbS-Nanokristalle mit Emissionen im Spektralbereich von ca. 850 nm bis 1750 nm hergestellt werden, wobei die spektrale Lage des ersten excitonischen Absorptionsmaximums und die spektrale Lage des Emissionsmaximums durch die Teilchengröße gesteuert werden kann. Ähnliche Absorptions- und Emissionsspektren werden z.B. in festen Matrices, beispielsweise PMMA oder Polystyrol, erhalten. Eine Anregung der Emission ist prinzipiell mit allen Wellenlängen möglich, bei denen die Nanokristalle absorbieren.

Figur 14 zeigt ein kombiniertes Emissionsspektrum einer aus drei breitbandig absorbierenden und emittierenden Chromophoren (C, D, E) bestehenden Farbstoff-Mischung (Mischungsverhältnis der Stammlösungen: 1:1:1) in Ethanol mit minimaler Farbstoff-Farbstoff-Wechselwirkung, angeregt bei 405 nm, sowie die jeweiligen Einzelspektren bei gleicher Anregungswellenlänge. Sehr ähnliche Absorptions- und Emissionsspektren resultieren beispielsweise für eine Kombination von Behältern oder Schichten der einzeln gelösten oder in eine feste Matrix eingebauten Farbstoffe C, D und E. Eine Intensitätsanpassung lässt sich - auch ohne Konzentrationsänderung - durch Einbau eines selektiv in Strahlungsrichtung vor dem Farbstoff D (und hinter C und E) angeordneten Abschwächers erzielen. Vorteilhaft an der gezeigten Kombination ist die Anregbarkeit aller drei Chromophore bei derselben Wellenlänge, nämlich bei 405 nm, welches eine gängige Anregungswellenlänge vieler Lumineszenzmesssysteme ist.

Der den in Figur 15 gezeigten Emissionsspektren zugrunde liegende breitbandig absorbierende und emittierende NIR-Chromophor ist Gegenstand der älteren Anmeldung DE 10 2008 040 513.2, dessen Verwendung im Rahmen der vorliegenden Erfindung ausdrücklich eingeschlossen ist. Die linke Bande zeigt die Emission in einem polaren Lösungsmittel (Ethanol), während rechts die Emissionsbande des Farbstoffs in einer vergleichsweise unpolaren festen Matrix (Polystyrol) jeweils bei 405 nm angeregt dargestellt ist. Das von diesem Chromophor in Polystyrol gezeigte breite unstrukturierte Emissionsspektrum ist Voraussetzung für den Einsatz als spektraler Emissionsstandard zur Ermittlung der relativen spektralen Empfindlichkeit von Lumineszenzmesssystemen, ermöglicht in eleganter Weise aber auch spektrales Shaping z.B. mit schmalbandigen Absorbern. Dieser Farbstoff kann mit beispielsweise mit den in den Figuren 11 bis 14 dargestellten Chromophoren zu einem erfindungsgemäßen "Sandwich-Standard" 10 gemäß den Figuren 2 bis 4 kombiniert werden, der insgesamt bei der gängigen Laserdiodenwellenlänge 405 nm zur Emission angeregt werden kann.

Die Absorptions- und Emissionsspektren von zwei typischen organischen Emittern, hier eingebaut in eine Polymermatrix, die zu einem Sandwich-Standard kombiniert werden und gemeinsam bei 488 nm angeregt werden können, sind in Figur 16 abgebildet.

Bei der Erfindung handelt es sich um einen variablen Ansatz für Standards und Referenzmaterialien mit problemadaptiert einstellbaren Absorptions-, Lumineszenz-, Streu- und Reflexionseigenschaften im UV/vis/NIR-Spektralbereich für die rückführbare Kalibrierung und Charakterisierung von optischen Messsystemen, insbesondere spektral und integral messenden Lumineszenzmesssystemen. Die in beliebigen Messgeometrien beidseitig (in z-Richtung und in -z-Richtung) einsetzbaren erfindungsgemäßen Sandwich-Standards sind darüber hinaus prinzipiell auch zur Charakterisierung von allen Messgeräten geeignet, die Transmission, Absorption und/oder Streuung messen. Diese Standards können dabei sowohl als separate Kalibrierwerkzeuge verwendet werden als auch in zu charakterisierende Geräte eingebaut werden. Applikationsspezifisch steuerbar sind hier insbesondere der Spektralbereich der Emission, die Emissionsintensitäten, die spektrale Lage und die Bandenform der Emission. Die Standards sind so konzipiert, dass ihre optische Eigenschaften außerdem durch die verwendete Messgeometrie variiert und gesteuert werden können. Die innovative Grundlage für diesen Ansatz bildet die Spektralbereich-, Intensitäts- und Messgeometrie-adaptierbare applikationsspezifische Auswahl und Kombination von unterschiedlichen absorbierenden, emittierenden und streuenden oder reflektierenden Komponenten.

Die Innovation dieser Sandwich-Standards besteht dabei darin, dass aus einer begrenzten Anzahl an hinsichtlich ihrer optischen Eigenschaften gut charakterisierten, innovativen oder bekannten Materialien durch geschickte und problemspezifische Kombination mit einem vergleichsweise geringen Aufwand immer wieder neue Standards mit problemadaptierten Absorptions-, Emissions- und Streueigenschaften hergestellt werden können. Damit wird eine Plattform von Standards für sehr viele verschiedene Applikationen von unterschiedlichen optischen Messtechniken, wie Lumineszenztechniken, und die Ermittlung und Kontrolle vieler verschiedener Geräte- und Materialparameter geschaffen. Diese Sandwich-Standards sind prinzipiell in zwei verschiedenen Messanordnungen einsetzbar, wobei die Standards so konzipiert werden, dass ihre optische Eigenschaften durch die verwendete Messgeometrie variiert und gesteuert werden können. Die Sandwich-Standards sind dabei sowohl zur Charakterisierung von Lumineszenzmesssystemen geeignet als auch zur Charakterisierung von allen Messgeräten, die Transmission, Absorption und/oder Streuung messen.

Die unterschiedlichen Komponenten dieser Sandwich-Standards werden dabei definiert in z-Richtung hintereinander gesetzt, z.B. durch Verkleben, Verschweißen oder bevorzugt durch die Verwendung von festen Halterungen wie Klammern oder Magnethalterungen, z.B. für Applikationen im Zusammenhang mit Fluorometern, Mikrofluorometern und Fluoreszenzsensoren (Einsatz in front-face Geometrie). Für Applikationen bzw. Lumineszenzmethoden, bei denen Messungen an planaren oder strukturierten "liegenden" Systemen bzw. Proben erfolgen, wie z.B. einem Mikroarray oder Mikroskop-Slide oder einer Mikrotiterplatte, werden diese Sandwich-Standards senkrecht zum Anregungslicht positioniert. Für mögliche Anwendungen in einer 0°/90°-Messgeometrie werden die Komponenten des Sandwich-Standards anregungs- und emissionsseitig auf die gewünschte Applikation angepasst. Beispielsweise kann man auch durch die Kombination von Farbstoffen mit Bandpass- oder Kantenfiltern aus x-beliebigen breitbandigen oder strukturierten Emissionsspektren Spektren mit variabler Form in einem variablen Spektralbereich erzeugen (Spectral Shaping), die für sehr viele verschiedene Kalibrier- und Charakterisierungsprobleme und den Einsatz als Bezugssysteme für Signalintensitäten geeignet sind und angepasst werden können.

Je nach verwendeten Komponenten kann der Sandwich-Standard zur Ermittlung der Wellenlängenrichtigkeit und des spektralen Auflösungsvermögens von Lumineszenzmesssystemen eingesetzt werden (z.B. Kombination verschiedener schmalbandig emittierender Fluorophore oder Kombination eines oder mehrerer Breitband-Emitter mit einem oder mehreren schmalbandigen Absorbern). Besonders attraktiv ist der Einsatz als Intensitätsstandard mit genau einstellbarer Emissionsintensität und genau einstellbaren spektralen Eigenschaften (z.B. Kombination eines breitbandigen Emitters mit einem schmalen Bandpassfilter zur Anpassung des Emissionsprofils und kombiniert mit einem Abschwächer zur Anpassung der Emissionsintensität). Eine weitere Applikation ist die Ermittlung des Linearitätsbereichs von Detektionssystemen (entweder verschiedene Sandwich-Standards, die sich z.B. hinsichtlich der Transmission der verwendeten Abschwächer unterscheiden, oder Verwendung eines Abschwächers mit variierender Transmission in x-Richtung). Die Applikation als Intensitätsstandard kann dabei auch die Verwendung als interner (integriert in das zu charakterisierende Messsystem) oder externer (nicht integriert in das zu charakterisierende Messsystem) Standard zur Referenzierung von Messsignalen bzw. als konstantes Bezugssystem für Fluoreszenzintensitäten beinhalten. Dies gilt analog auch für die Funktion als spektraler Standard. Die Kombination verschiedener, idealerweise bei einer Wellenlängen anregbarer, breitbandig emittierender Chromophore (Chromophore ohne oder mit minimaler Interaktion oder Energietransfer-Kaskade bzw. Kaskadensysteme; Nanokristallsysteme mit Partikelgrößen-steuerbarer spektraler Lage von Absorption und Emission und der dargestellte NIR-Chromophor), die sich entweder einzeln oder zu mehreren in verschiedenen festen Matrices oder in verschiedenen flüssigen Matrices (in geeigneten Behältnissen) befinden, kann zur Ermittlung der (relativen) spektralen Empfindlichkeit von Fluoreszenzmesssystemen (Emissionskorrektur) über einen sehr breiten Spektralbereich verwendet werden. Dies ist sehr attraktiv im Hinblick darauf, dass einfache Chromophor-Systeme und spektrale Fluoreszenzstandards bzw. Emissionsstandards in einer einzigen Messung nur einen Spektralbereich von maximal 150 - 200 nm (vis-Bereich; Beispiel Chininsulfat) abdecken. Dies gilt auch für Kombinationen bzw. Sets von spektralen Standards, die typischerweise alle bei verschiedenen Anregungswellenlängen zur Emission angeregt werden müssen. Weitere Optionen sind die Kombination von fluoreszierenden und streuenden Systemen zur Ermittlung der Homogenität der Ausleuchtung bei Imaging-Methoden und die Kombination von fluoreszierenden Systemen mit strukturiert aufgetragenen, als Masken fungierenden absorbierenden oder reflektierenden Materialien.

Darüber hinaus sind die Sandwich-Standards für die Charakterisierung von Spektrometern, die in 0°/180°-Messgeometrie arbeiten (Transmission und Absorption, Kalibrierung ohne / mit Fluoreszenz) und für die Charakterisierung von Ulbrichtkugelmesssystemen (Standards mit definierten optischen Eigenschaften ohne/mit Lumineszenz) geeignet sowie für IR- und Raman-Spektrometer.

### BEZUGSZEICHENLISTE

- 10: Optischer Standard
- 12: optisches Standardmodul
- 12.1: Hauptfläche des optischen Standardmoduls
- 12.2: Seitenfläche des optischen Standardmoduls
- 14: Emissionsstandardmodul
- 16: Abschwächer
- 18: Spiegel
- 20: Absorptionsstandardmodul
- 22: Diffusor
- 24: Maske
- 24.1: reflektierender oder absorbierender Maskenabschnitt
- 24.2: materialfreier Maskenabschnitt (Apertur)
- 24.3: Diffusorabschnitt
- 24.4: Spiegelabschnitt
- 24.5: Abschwächerabschnitt

- BBE: breitbandiger Emitterstandard
- NBE: schmalbandiger Emitterstandard
- BBA: breitbandiger Absorberstandard
- NBA: schmalbandiger Absorberstandard

## Patentansprüche

1. Optischer Standard (10) zur Kalibrierung oder Charakterisierung von optischen Messeinrichtungen oder Intensitäts-Referenzsystem bzw. für Intensitätsmessungen, umfassend eine Kombination von mindestens zwei im Wesentlichen planparallel unmittelbar aneinander angrenzend miteinander verbindbaren oder unmittelbar aneinander angrenzend miteinander verbundenen schichtförmigen optischen Standardmodulen (12) mit definierten optischen Eigenschaften, wobei die Standardmodule (12) sich jeweils durch mindestens eine optische Eigenschaft voneinander unterscheiden, nämlich durch ihre Absorptions-, Emissions-, Streu- und/oder Reflexionseigenschaften, und die Standardmodule (12) so beschaffen sind, dass sie mit einer auf einer ihrer beiden Hauptflächen (12.1) auftreffenden elektromagnetischen Strahlung in physikalische Wechselwirkung treten,
wobei
die optischen Standardmodule (12) zumindest eine Kombination mehrerer chromophorbasierter und/oder physikalischer Emissionsstandardmodule (14, 14', 14") umfassen, die so aufeinander abgestimmt sind,
dass ihre Emissionsbanden einander teilweise so überlappen, dass die relative Intensität an den Überschneidungswellenlängen benachbarter normierter Emissionsbanden der Emissionsstandardmodule mindestens 10 % des Bandenmaximums beträgt.

2. Optischer Standard (10) nach Anspruch 1,
**dadurch gekennzeichnet, dass**
die optischen Standardmodule (12) zumindest ein Absorptionsstandardmodul (20) zur wellenlängenabhängigen Absorption der Strahlung umfassen, insbesondere eine Kombination mehrerer Absorptionsstandardmodule (20).

3. Optischer Standard (10) nach einem der vorhergehenden Ansprüche,
**dadurch gekennzeichnet, dass**
die optischen Standardmodule (12) zumindest ein Streumodul (22) zur wellenlängenabhängigen oder -unabhängigen, diffusen Streuung der eintretenden Strahlung umfassen.

4. Optischer Standard (10) nach einem der vorhergehenden Ansprüche,
**dadurch gekennzeichnet, dass**
die optischen Standardmodule (12) zumindest einen Abschwächer (16) umfassen, der im Wesentlichen wellenlängenunabhängig eine Strahlungsintensität homogen oder mit einer entlang seiner Hauptflächen (12.1) graduell oder stufenweise variierenden Transmission abschwächt.

5. Optischer Standard (10) nach einem der vorhergehenden Ansprüche,
**dadurch gekennzeichnet, dass**
die optischen Standardmodule (12) zumindest einen optischen Filter zur Ausblendung zumindest eines definierten wellenlängenabhängigen Spektralbereichs umfassen, insbesondere zumindest einen Bandpass- und/oder zumindest einen Kantenfilter.

6. Optischer Standard (10) nach einem der vorhergehenden Ansprüche,
**dadurch gekennzeichnet, dass**
die optischen Standardmodule (12) zumindest ein Spiegelmodul (18) umfassen, das die Strahlung teilreflektiert oder im Wesentlichen totalreflektiert.

7. Optischer Standard (10) nach einem der vorhergehenden Ansprüche,
**dadurch gekennzeichnet, dass**
die optischen Standardmodule (12) zumindest eine Maske (24) umfassen, die in zumindest einer entlang ihrer Hauptflächen verlaufenden x,y-Richtung Abschnitte unterschiedlicher optischer Eigenschaften aufweist, die ausgewählt sind aus reflektierenden oder totalabsorbierenden Abschnitten (24.1), Aperturabschnitten (24.2), Streuabschnitten (24.3), Spiegelabschnitten (24.4) und Abschwächerabschnitten (24.5).

8. Optischer Standard (10) nach einem der vorhergehenden Ansprüche,
umfassend eine Kombination aus zumindest zwei breitbandig emittierenden Emissionsstandardmodulen (14, 14', 14"), zumindest einen Abschwächer (16, 16') und/oder Diffusor (22) und optional einen Spiegel (18).

9. Optischer Standard (10) nach einem der vorhergehenden Ansprüche,
umfassend eine Kombination aus zumindest einem breitbandig emittierenden Emissionsstandardmodul (14, 14', 14") und zumindest einem schmalbandig absorbierenden Absorptionsmodul (20), wobei zumindest eine schmale Absorptionsbande des Absorptionsmoduls (20) spektral mit zumindest einer breiten Emissionsbande des Emissionsstandardmoduls (14, 14', 14") überlappt, zumindest einen Abschwächer (16) und/oder Diffusor (22) und optional einen Spiegel (18).

10. Optischer Standard (10) nach einem der vorhergehenden Ansprüche,
**dadurch gekennzeichnet, dass** die optischen Standardmodule (12) miteinander verklebt oder verschweißt sind oder durch mechanische Fixierungsmittel, insbesondere Klammern oder Magnethalterungen lösbar miteinander verbunden sind.

11. Kit, umfassend eine Mehrzahl unterschiedlicher planparallel unmittelbar aneinander angrenzend miteinander verbindbarer, oder unmittelbar aneinander angrenzend miteinander verbundener schichtförmiger optischer Standardmodule (12), die geeignet sind, mit einer auf einer ihrer beiden Hauptflächen (12.1) auftreffenden elektromagnetischen Strahlung in physikalische Wechselwirkung zu treten und die sich jeweils durch mindestens eine optische Eigenschaft voneinander unterscheiden, nämlich durch ihre Absorptions-, Emissions-, Streu- und/oder Reflexionseigenschaften, wobei die optischen Standardmodule (12) zumindest eine Kombination mehrerer chromophorbasierter und/oder physikalischer Emissionsstandardmodule (14, 14', 14") umfassen, die so aufeinander abgestimmt sind, dass ihre Emissionsbanden einander teilweise so überlappen, dass die relative Intensität an den Überschneidungswellenlängen benachbarter normierter Emissionsbanden der Emissionsstandardmodule mindestens 10 % des Bandenmaximums beträgt und die Standardmodule (12) ausgewählt sind, aus der Gruppe umfassend:
- Emissionsstandardmodule (14) zur Emission eines Lumineszenzspektrums,
- Absorptionsstandardmodule (20) zur wellenlängenabhängigen Absorption der Strahlung,
- Streumodule (22) zur wellenlängenabhängigen oder -unabhängigen, diffusen Streuung von Strahlung,
- Abschwächer (16) zur im Wesentlichen wellenlängenunabhängigen Abschwächung einer Strahlungsintensität mit einer homogenen Transmission oder einer entlang seiner Hauptflächen (12.1) graduell oder stufenweise variierenden Transmission,
- optische Filter zur Ausblendung zumindest eines definierten wellenlängenabhängigen Spektralbereichs,
- Spiegelmodule (18), welche die Strahlung teil- oder im Wesentlichen totalreflektieren, und
- Masken (24), die in zumindest einer entlang ihrer Hauptflächen verlaufenden x,y- Richtung Abschnitte unterschiedlicher optischer Eigenschaften aufweisen, die ausgewählt sind aus reflektierenden oder totalabsorbierenden Abschnitten (24.1), Aperturabschnitten (24.2), Streuabschnitten (24.3), Spiegelabschnitten (24.4) und Abschwächerabschnitten (24.5).

12. Verwendung eines Optischen Standards (10) nach einem der Ansprüche 1 bis 10 oder eines Kits nach Anspruch 11 zur spektralen Kalibrierung und/oder zur Charakterisierung einer optischen Messeinrichtung und/oder als Intensitäts-Referenzsystem.

13. Verwendung nach Anspruch 12, wobei die optische Messeinrichtung ausgewählt ist aus spektral oder integral messenden Lumineszenzmesssystemen, UV-, UV/vis-, IR- und Raman-Spektrometern, Mikroskopen und optischen Mikrotiterplattenauslesegeräten.

## Claims

1. An optical standard (10) for purposes of calibration or characterisation of optical measuring devices or an intensity reference system, or for intensity measurements, comprising a combination of at least two layer-form optical standard modules (12) with defined optical properties that in an essentially plane parallel manner can be connected with one another directly adjoining one another, or are connected with one another directly adjoining one another, wherein
the standard modules (12) differ from one another in each case by at least one optical property, namely by their absorption, emission, scattering and/or reflection properties, and the standard modules (12) are provided such that they interact with an electromagnetic radiation impinging on one of their two main surfaces (12.1), wherein
the optical standard modules (12) comprise at least a combination of a plurality of chromophore-based and/or physical emission standard modules (14, 14', 14") which are coordinated with one another in such a way that their emission bands partly overlap in such a way that the relative intensity at the intersection wavelengths of adjacent normalised emission bands of the emission standard modules is at least 10% of the band maximum.

2. The optical standard (10) in accordance with claim 1,
**characterised in that**,
the optical standard modules (12) comprise at least one absorption standard module (20) for purposes of wavelength-dependent absorption of the radiation, in particular a combination of a plurality of absorption standard modules (20).

3. The optical standard (10) in accordance with one of the preceding claims,
**characterised in that**,
the optical standard modules (12) comprise at least one scattering module (22) for purposes of wavelength-dependent or -independent, diffuse scattering of the incident radiation.

4. The optical standard (10) in accordance with one of the preceding claims,
**characterised in that**,
the optical standard modules (12) comprise at least one attenuator (16), which in an essentially wavelength-independent manner attenuates a radiation intensity homogeneously, or with a transmission varying gradually or in a stepwise manner along its main surfaces (12.1).

5. The optical standard (10) in accordance with one of the preceding claims,
**characterised in that**,
the optical standard modules (12) comprise at least one optical filter for purposes of masking at least one defined wavelength-dependent spectral range, in particular at least one bandpass filter and/or at least one edge filter.

6. The optical standard (10) in accordance with one of the preceding claims,
**characterised in that**,
the optical standard modules (12) comprise at least one mirror module (18), which partially reflects or essentially totally reflects the radiation.

7. The optical standard (10) in accordance with one of the preceding claims,
**characterised in that**,
the optical standard modules (12) comprise at least one mask (24) which in at least one x, y direction, extending along its main surfaces, has sections of differing optical properties, which are selected from reflecting or totally absorbing sections (24.1), aperture sections (24.2), scattering sections (24.3), mirror sections (24.4) and attenuator sections (24.5).

8. The optical standard (10) in accordance with one of the preceding claims,
comprising a combination of at least two broadband emitting emission standard modules (14, 14', 14"), at least one attenuator (16, 16') and/or a diffuser (22), and optionally a mirror (18).

9. The optical standard (10) in accordance with one of the preceding claims,
comprising a combination of at least one broadband emitting emission standard module (14, 14', 14"), and at least one narrowband absorbing absorption module (20), wherein
at least one narrow absorption band of the absorption module (20) overlaps spectrally with at least one broad emission band of the emission standard module (14, 14', 14"), at least one attenuator (16) and/or a diffuser (22), and optionally a mirror (18).

10. The optical standard (10) in accordance with one of the preceding claims,
**characterised in that**,
the optical standard modules (12) are adhesively bonded or welded together, or are releasably connected with one another by mechanical fixing means, in particular clamps or magnetic holders.

11. A kit comprising a plurality of differing layer-form optical standard modules (12) that in an essentially plane parallel manner can be connected with one another directly adjoining one another, or are connected with one another directly adjoining one another, which are suitable for physical interaction with an electromagnetic radiation impinging on one of their two main surfaces (12.1), and which differ from each other by at least one optical property, namely by their absorption, emission, scattering and/or reflection properties, wherein the optical standard modules (12) comprise at least a combination of a plurality of chromophore-based and/or physical emission standard modules (14, 14', 14") which are coordinated with one another in such a way that their emission bands partially overlap one another in such a way that the relative intensity at the intersection wavelengths of adjacent normalised emission bands of the emission standard modules is at least 10% of the band maximum, and the standard modules (12) are selected from the group comprising:
- emission standard modules (14) for purposes of emitting a luminescence spectrum,
- absorption standard modules (20) for wavelength-dependent absorption of the radiation,
- scattering modules (22) for wavelength-dependent, or -independent, diffuse scattering of radiation,
- attenuators (16) for an essentially wavelength-independent attenuation of a radiation intensity with a homogeneous transmission or a transmission varying gradually or in a stepwise manner along its main surfaces (12.1),
- optical filters for purposes of masking at least one defined wavelength-dependent spectral range,
- mirror modules (18) which partially or essentially totally reflect the radiation, and
- masks (24), which in at least one x,y direction have sections of differing optical properties, which are selected from reflecting or totally absorbing sections (24.1), aperture sections (24.2), scattering sections (24.3), mirror sections (24.4), and attenuator sections (24.5).

12. The use of an optical standard (10) according to one of the claims 1 to 10, or a kit according to claim 11,
for purposes of spectral calibration and/or for purposes of characterising an optical measuring device and/or as an intensity reference system.

13. The use in accordance with claim 12, wherein
the optical measuring device is selected from spectrally or integrally measuring luminescence measurement systems, UV-, UV/vis-, IR- and Raman-spectrometers, microscopes and optical microtiter plate readers.

## Revendications

1. Standard optique (10) servant à étalonner ou à caractériser des dispositifs de mesure optiques ou des systèmes de référence d'intensité ou pour des mesures d'intensité, comprenant une combinaison d'au moins deux modules de standard optique (12) optiques en forme de couche, présentant des propriétés optiques définies, reliés l'un à l'autre de manière directement adjacente l'un à l'autre ou pouvant être reliés l'un à l'autre de manière directement adjacente l'un à l'autre sensiblement en plan parallèle, les modules de standard (12) se distinguant l'un de l'autre dans chaque cas par au moins une propriété optique, à savoir par leurs propriétés d'absorption, d'émission, de dispersion et/ou de réflexion, et les modules de standard (12) étant structurés de manière à être en interaction physique avec un rayonnement électromagnétique incident sur une de leurs deux surfaces principales (12.1),
les modules de standard optique (12) comprenant au moins une combinaison de plusieurs modules de standard d'émission (14, 14', 14'') à base de chromophore et/ou physiques, qui sont adaptés les uns aux autres de telle sorte que leurs bandes d'émission se chevauchent partiellement, que l'intensité relative des longueurs d'onde de chevauchement de bandes d'émission normalisées voisines des modules de standard d'émission atteint au moins 10 % du maximum de la bande.

2. Standard optique (10) selon la revendication 1,
**caractérisé en ce que**
les modules de standard optiques (12) comprennent au moins un module de standard d'absorption (20) destiné à absorber le rayonnement en fonction des longueurs d'onde, en particulier une combinaison de plusieurs modules de standards d'absorption (20).

3. Standard optique (10) selon l'une quelconque des revendications précédentes,
**caractérisé en ce que**
les modules de standard optique (12) englobent au moins un module de dispersion (22) destiné à la dispersion diffuse, dépendante ou indépendante des longueurs d'onde, du rayonnement entrant.

4. Standard optique (10) selon l'une quelconque des revendications précédentes,
**caractérisé en ce que**
les modules de standard optique (12) comprennent au moins un atténuateur (16) qui atténue une intensité de rayonnement, sensiblement indépendamment des longueurs d'onde, de manière homogène ou avec une transmission variant graduellement ou progressivement le long d'une de ses surfaces principales (12.1).

5. Standard optique (10) selon l'une quelconque des revendications précédentes,
**caractérisé en ce que**
les modules de standard optique (12) comprennent au moins un filtre optique destiné à masquer au moins une plage spectrale définie dépendant des longueurs d'onde, en particulier au moins un filtre passe-bande et/ou au moins un filtre à arêtes.

6. Standard optique (10) selon l'une quelconque des revendications précédentes,
**caractérisé en ce que**
les modules de standard optique (12) comprennent au moins un module de miroir (18) qui réfléchit en partie ou sensiblement entièrement le rayonnement.

7. Standard optique (10) selon l'une quelconque des revendications précédentes,
**caractérisé en ce que**
les modules de standard optique (12) comprennent au moins un masque (24) qui comporte dans au moins une direction x,y s'étendant le long de ses surfaces principales des parties présentant des propriétés optiques différentes, qui sont choisies parmi des parties réfléchissantes ou totalement absorbantes (24.1), des parties d'ouverture (24.2), des parties de dispersion (24.3), des parties de miroir (24.4) et des parties d'atténuateur (24.5).

8. Standard optique (10) selon l'une quelconque des revendications précédentes, comprenant une combinaison d'au moins deux modules de standard d'émission (14, 14', 14'') à émission à large bande, au moins un atténuateur (16, 16') et/ou un diffuseur (22) et éventuellement un miroir (18).

9. Standard optique (10) selon l'une quelconque des revendications précédentes, comprenant une combinaison d'au moins un module de standard d'émission (14, 14', 14") à émission à large bande et d'au moins un module d'absorption (20) à absorption à bande étroite, au moins une bande d'absorption étroite du module d'absorption (20) chevauchant de manière spectrale au moins une bande d'émission large du module de standard d'émission (14, 14', 14''), au moins un atténuateur (16) et/ou un diffuseur (22) et éventuellement un miroir (18).

10. Standard optique (10) selon l'une quelconque des revendications précédentes, **caractérisé en ce que** les modules de standard optique (12) sont collés ou soudés ensemble ou reliés ensemble de manière libérable par des moyens de fixation mécaniques, en particulier par des attaches ou des éléments de retenue magnétiques.

11. Kit, comprenant une pluralité de différents modules de standard optique (12) optiques en forme de couche, présentant des propriétés optiques définies, reliés l'un à l'autre de manière directement adjacente l'un à l'autre ou pouvant être reliés l'un à l'autre de manière directement adjacente l'un à l'autre sensiblement en plan parallèle, qui sont adaptés à être en interaction physique avec un rayonnement électromagnétique incident sur une de leurs deux surfaces principales (12.1) et qui se distinguent l'un de l'autre dans chaque cas par au moins une propriété optique, à savoir par leurs propriétés d'absorption, d'émission, de dispersion et/ou de réflexion, les modules de standard optique (12) comprenant au moins une combinaison de plusieurs modules de standard d'émission (14, 14', 14'') à base de chromophore et/ou physiques, qui sont adaptés les uns aux autres de telle sorte que leurs bandes d'émission se chevauchent partiellement, que l'intensité relative des longueurs d'onde de chevauchement de bandes d'émission normalisées voisines des modules de standard d'émission atteint au moins 10 % du maximum de la bande et les modules de standard optiques (12) étant choisis dans le groupe comprenant :
- des modules de standard d'émission (14) destinés à émettre un spectre de luminescence,
- des modules de standard d'absorption (20) destinés à absorber en fonction des longueurs d'onde le rayonnement,
- des modules de dispersion (22) permettant la dispersion diffuse, dépendante ou indépendante des longueurs d'onde, du rayonnement,
- des atténuateurs (16) permettant l'atténuation sensiblement indépendante des longueurs d'onde d'une intensité de rayonnement avec une transmission homogène ou avec une transmission variant graduellement ou progressivement le long d'une de ses surfaces principales (12.1)
- des filtres optiques destinés à masquer au moins une plage spectrale définie dépendante des longueurs d'onde,
- des modules de miroir (18) qui réfléchissent en partie ou sensiblement entièrement le rayonnement, et
- des masques (24) qui comportent dans au moins une direction x,y s'étendant le long de ses surfaces principales des parties présentant des propriétés optiques différentes, qui sont choisies parmi des parties réfléchissantes ou totalement absorbantes (24.1), des parties d'ouverture (24.2), des parties de dispersion (24.3), des parties de miroir (24.4) et des parties d'atténuateur (24.5).

12. Utilisation d'un standard optique (10) selon l'une quelconque des revendications 1 à 10 ou d'un kit selon la revendication 11 pour l'étalonnage spectral et/ou pour la caractérisation d'un dispositif de mesure optique et/ou comme système de référence d'intensité.

13. Utilisation selon la revendication 12, le dispositif de mesure optique étant choisi parmi des systèmes de mesure de luminescence à mesure spectrale ou intégrale, des spectromètres UV, UV/vis, IR et Raman, des microscopes et des appareils de lecture de plaque microtitre.
